(19) Europäisches Patentamt
European Patent Office
Office européen des brevets

(11) EP 1 739 100 A1

(12) EUROPEAN PATENT APPLICATION
published in accordance with Art. 158(3) EPC

(43) Date of publication:
03.01.2007 Bulletin 2007/01

(21) Application number: 05728782.3

(22) Date of filing: 05.04.2005

(51) Int Cl.:
C08F 2/26 (2006.01) C08F 2/38 (2006.01)
C08F 214/18 (2006.01) C08F 216/14 (2006.01)

(86) International application number:
PCT/JP2005/006678

(87) International publication number:
WO 2005/097836 (20.10.2005 Gazette 2005/42)

(84) Designated Contracting States:
AT BE BG CH CY CZ DE DK EE ES FI FR GB GR HU IE IS IT LI LT LU MC NL PL PT RO SE SI SK TR

(30) Priority: 07.04.2004 JP 2004113684
16.09.2004 JP 2004270481

(71) Applicant: DAIKIN INDUSTRIES, LTD.
Osaka-shi, Osaka 530-8323 (JP)

(72) Inventors:
- TSUDA, Nobuhiko, DAIKIN INDUSTRIES, LTD. Settsu-shi, Osaka 56685 85 (JP)
- TANAKA, Yoshiki, DAIKIN INDUSTRIES, LTD. Settsu-shi, Osaka 56685 85 (JP)
- MORITA, Shigeru, DAIKIN INDUSTRIES, LTD. Settsu-shi, Osaka 56685 85 (JP)
- SAWADA, Yasuhiko, DAIKIN INDUSTRIES, LTD. Settsu-shi, Osaka 56685 85 (JP)
- SHIMIZU, Tetsuo, DAIKIN INDUSTRIES, LTD. Settsu-shi, Osaka 56685 85 (JP)

(74) Representative: HOFFMANN EITLE
Patent- und Rechtsanwälte
Arabellastrasse 4
81925 München (DE)

# (54) METHOD FOR PRODUCING FLUORINE-CONTAINING ELASTOMER POLYMER

(57) The present invention provides a method of producing an elastomeric fluoropolymer excellent in moldability and processability and in mechanical strength, such as permanent compression set, and chemical strength, such as chemical resistance. The present invention is a method of producing an elastomeric fluoropolymer which comprises first polymerization step for obtaining an aqueous emulsion by emulsion polymerization of a fluoromonomer [A] in an aqueous medium in the presence of a vinyl group-containing fluorinated emulsifier and second polymerization step for producing an elastomeric fluoropolymer by emulsion polymerization of a fluoromonomer [B] in the aqueous emulsion, wherein the vinyl group-containing fluorinated emulsifier is a compound having a radical polymerizable unsaturated bond and a hydrophilic group within the molecule thereof.

EP 1 739 100 A1

**Description**

TECHNICAL FIELD

The present invention relates to a method of producing an elastomeric fluoropolymer.

BACKGROUND ART

In carrying out the polymerization in an aqueous medium for obtaining fluoroelastomers, fluorine-containing surfactants are often used as emulsifiers in the art, and the fluoroelastomers obtained from such polymerization generally contain residual fluorine-containing surfactants. The occurrence of residual fluorine-containing surfactants causes a problem, namely disturbs the vulcanization or curing step, which is a step in the process of molding.

A known method of producing a fluoroelastomer comprises polymerizing a fluoromonomer in an aqueous medium with a pH of 5 to 10 in the presence of $CF_2$=CFO-$(CF_2)_s$-COOT (in which s is an integer of 1 to 7 and T is an alkali metal or the like) (cf. e.g. Patent Document 1: Japanese Kokoku Publication S61-33848). However, Patent Document 1 gives no description of the possibility of multistage polymerization.

As a method of producing fluoroelastomers, there is known the method comprising producing aqueous dispersions of a vinylidene fluoride [VDF]-based copolymer in the presence of $CF_2$=CF-$(CF_2)_t$-Y (wherein t is an integer of 1 to 10 and Y is a carboxyl group) (cf. e.g. Patent Document 2: Japanese Kokai Publication H08-67795). However, although it describes the seed polymerization of an ethylenically unsaturated monomer (fluorine-free monomer) in the presence of an aqueous dispersion of that VDF-based copolymer, Patent Document 2 gives no description of the seed polymerization of a fluoromonomer. Further, the document has no suggestion about a method of seed polymerization, in a stable manner, of 100 parts by weight or a larger amount of an ethylenically unsaturated monomer per 100 parts by weight of the VDF-based copolymer or about the possibility of seed polymerization, in a stable manner, of 100 parts by weight or a larger amount of a fluoromonomer other than such ethylenically unsaturated monomer per 100 parts by weight of the VDF-based copolymer.

For producing fluoroelastomers, a multistage polymerization method is known which comprises carrying out the first stage of polymerization in an aqueous medium in the presence of an emulsifier in an amount of not smaller than 0.5% by mass relative to the aqueous medium, then diluting the thus-obtained emulsion comprising seed particles, adding a monomer and carrying out the second stage of polymerization and so forth (cf. e.g. Patent Document 3: WO 00/001741). By carrying out the polymerization in multiple stages according to this method, it is possible to improve the production efficiency while reducing the amount of the emulsifier to be used; however, a certain amount of the emulsifier remains. Further, Patent Document 3 does not give any suggestion about carrying out this multistage polymerization in the presence of a vinyl group-containing fluorinated emulsifier.

DISCLOSURE OF INVENTION

PROBLEMS WHICH THE INVENTION IS TO SOLVE

In view of the above-discussed state of the art, it is an object of the present invention to provide a method of producing an elastomeric fluoropolymer excellent in moldability and processability and in mechanical strength, such as permanent compression set, and chemical strength, such as chemical resistance.

MEANS FOR SOLVING THE PROBLEMS

The present invention is a method of producing an elastomeric fluoropolymer which comprises first polymerization step for obtaining an aqueous emulsion by emulsion polymerization of a fluoromonomer [A] in an aqueous medium in the presence of a vinyl group-containing fluorinated emulsifier and second polymerization step for producing an elastomeric fluoropolymer by emulsion polymerization of a fluoromonomer [B] in the aqueous emulsion, wherein the vinyl group-containing fluorinated emulsifier is a compound having a radical polymerizable unsaturated bond and a hydrophilic group within the molecule thereof.

The present invention is a method of producing an elastomeric fluoropolymer which comprises first polymerization step for obtaining an aqueous emulsion by emulsion polymerization of a fluoromonomer [A] in an aqueous medium in the presence of a vinyl group-containing fluorinated emulsifier and second polymerization step for producing an elastomeric fluoropolymer by emulsion polymerization of a fluoromonomer [B] in the aqueous emulsion, wherein the vinyl group-containing fluorinated emulsifier is a vinyl group-containing fluorinated compound (I) represented by the general formula (I):

$$CF_2=CF-(CF_2)_a-Y \qquad (I)$$

[wherein a represents an integer of 1 to 10 and Y represents $-SO_3M$ or -COOM in which M represents H, $NH_4$ or an alkali metal], a vinyl group-containing fluorinated compound (II) represented by the general formula (II):

$$CF_2=CF-(CF_2C(CF_3)F)_b-Y \qquad (II)$$

[wherein b represents an integer of 1 to 5 and Y represents $-SO_3M$ or -COOM in which M represents H, $NH_4$ or an alkali metal], a vinyl group-containing fluorinated compound (III) represented by the general formula (III):

$$CF_2=CFO-(CF_2)_c-Y \qquad (III)$$

[wherein c represents an integer of 1 to 10 and Y represents $-SO_3M$ or -COOM in which M represents H, $NH_4$ or an alkali metal], a vinyl group-containing fluorinated compound (IV) represented by the general formula (IV):

$$CF_2=CF(CF_2)_d-O-(CF_2CFXO)_e-(CF_2)_f-Y \qquad (IV)$$

[wherein X represents -F or $-CF_3$, d represents an integer of 0 to 2, e represents an integer of 1 to 10, f represents an integer of 1 to 3 and Y represents $-SO_3M$ or -COOM in which M represents H, $NH_4$ or an alkali metal], a vinyl group-containing fluorinated compound (V) represented by the general formula (V):

$$CH_2=CFCF_2O-(CF(CF_3)CF_2O)_g-CF(CF_3)-Y \qquad (V)$$

[wherein g represents an integer of 0 to 10 and Y represents $-SO_3M$ or -COOM in which M represents H, $NH_4$ or an alkali metal], a vinyl group-containing fluorinated compound (VI) represented by the general formula (VI):

$$CF_2=CF(CF_2)_hO-(CF(CF_3)CF_2O)_i-CF(CF_3)-Y \qquad (VI)$$

[wherein h represents an integer of 1 to 6, i represents an integer of 1 to 10 and Y represents - $SO_3M$ or -COOM in which M represents H, $NH_4$ or an alkali metal], a vinyl group-containing fluorinated compound (VII) represented by the general formula (VII) :

$$CH_2=CH\ (CF_2)_{p1}-Y \qquad (VII)$$

[wherein p1 represents an integer of 1 to 10 and Y represents $-SO_3M$ or -COOM in which M represents H, $NH_4$ or an alkali metal] and/or a vinyl group-containing fluorinated compound (VIII) represented by the general formula (VIII):

$$CF_2=CFO-(CH_2)_q-(CF_2)_{p2}-Y \qquad (VIII)$$

[wherein q represents an integer of 1 to 4, p2 represents an integer of 1 to 10 and Y represents - $SO_3M$ or -COOM in which M represents H, $NH_4$ or an alkali metal].

The present invention is an elastomeric fluoropolymer aqueous dispersion which comprises a particle comprising an elastomeric fluoropolymer dispersed in an aqueous medium, wherein the elastomeric fluoropolymer is an elastomeric fluoropolymer produced by the above-mentioned method, the elastomeric fluoropolymer aqueous dispersion contains a vinyl group-containing fluorinated emulsifier or does not contain any vinyl group-containing fluorinated emulsifier and the content of the vinyl group-containing fluorinated emulsifier is lower than 1000 ppm relative to the elastomeric fluoropolymer aqueous dispersion.

In the following, the present invention is described in detail.

Referring to the method of producing an elastomeric fluoropolymer of the invention, the "elastomeric fluoropolymer" means a noncrystalline fluoropolymer having rubber elasticity. The above fluoropolymer is a polymer having a fluorine atom content of at least 58% by mass, preferably 64% by mass, and it may be a partially fluorinated polymer or a perfluoropolymer.

The elastomeric fluoropolymer has 30 to 80% by mass of the comonomer unit of the first monomer.

The term "first monomer" as used herein means vinylidene fluoride [VDF] or tetrafluoroethylene [TFE] constituting the comonomer unit that is the greatest majority among all comonomer units in the molecular structure of the elastomeric fluoropolymer. Among the elastomeric fluoropolymers mentioned above, those copolymers derived from the first monomer VDF are sometimes referred to as "VDF-based copolymers", and those polymers derived from the first monomer TFE as "TFE-based copolymers".

In the present specification, each comonomer unit mentioned above is a part of the molecular structure of the elastomeric fluoropolymer and means the portion derived from the corresponding monomer. For example, the VDF unit is a part of the molecular structure of the VDF-based copolymer and is the VDF-derived segment and is represented by $-(CH_2-CF_2)-$. The above-mentioned "all comonomer units" are all monomer-derived portions in the molecular structure of the elastomeric fluoropolymer.

The contents of the above-mentioned comonomer units can be determined by $F^{19}$-NMR measurements.

The elastomeric fluoropolymer mentioned above may comprise, in addition to the first monomer units, monomer units derived from a monomer other than the first monomer.

The monomer other than the first monomer is copolymerizable with the first monomer. The monomer units derived from the monomer other than the first monomer may be units derived only one species among the monomers copolymerizable with the first monomer or may comprise units derived from two or more monomer species copolymerizable with the first monomer.

In the elastomeric fluoropolymer mentioned above, the units derived from the monomer(s) other than the first monomer and involved in the copolymerization may be units derived from only one of the monomers copolymerizable with the first monomer or may be units derived from two or more monomers copolymerizable with the first monomer.

The monomer copolymerizable with the first monomer is, for example, a fluoroolefin, a fluorine-containing vinyl ether or an olefin hydrocarbon.

The fluoroolefin is not particularly restricted but includes, among others, hexafluoropropylene [HFP], tetrafluoroethylene [TFE], 1,2,3,3,3-pentafluoropropene [1-HPFP], chlorotrifluoroethylene [CTFE] and vinyl fluoride [VF].

The fluorine-containing vinyl ether is not particularly restricted but includes perfluoro(alkyl vinyl ether) species.

Preferred as the perfluoro(alkyl vinyl ether) [PAVE] are compounds represented by the formula $CF_2{=}CFO(Rf^aO)_n(Rf^bO)_mRf^c$ [in which $Rf^a$ and $Rf^b$ are the same or different and each is a straight or branched perfluoroalkylene group containing 2 to 6 carbon atoms, m and n each independently is an integer of 0 to 10 and $Rf^c$ is a perfluoroalkyl group containing 1 to 6 carbon atoms].

More preferred as the above-mentioned PAVE are compounds represented by the formula $CF_2{=}CFO(CF_2CFXO)_rRf^d$ [in which X is -F or $-CF_3$, r is an integer of 0 to 5 and $Rf^d$ is a perfluoroalkyl group containing 1 to 6 carbon atoms].

The above-mentioned PAVE is preferably perfluoro(methyl vinyl ether) [PMVE], perfluoro(ethyl vinyl ether) [PEVE] or perfluoro(propyl vinyl ether) [PPVE].

The above-mentioned PAVE is preferably a compound represented by the formula $CF_2{=}CFO[(CF_2)_uCF_2CFZ^1O]_vRf^e$ [in which $Rf^e$ is a perfluoroalkyl group containing 1 to 6 carbon atoms, u is an integer of 0 or 1, v is an integer of 0 to 5 and $Z^1$ is -F or $-CF_3$].

The above-mentioned group $Rf^e$ is preferably $-C_3F_7$, the integer u is preferably 0 and the integer v is preferably 1.

The above-mentioned PAVE is preferably a compound represented by the formula $CF_2{=}CFO[(CF_2CF(CF_3)O)_m(CF_2CF_2CF_2O)_n(CF_2)_y]C_zF_{2z+1}$ [in which m and n each independently is an integer of 0 to 10, y is an integer of 0 to 3 and z is an integer of 1 to 5, indicating the number of carbon atoms].

Preferably, the above-mentioned integers m and n each independently is 0 or 1, and the integer z is preferably 1.

The above-mentioned PAVE is preferably a compound represented by the formula $CF_2{=}CFOCF_2CF(CF_3)O(CF_3O)_wC_xF_{2x+1}$ [in which w is an integer of 1 to 5 and x is an integer of 1 to 3].

The integer x mentioned above is preferably 1.

When the elastomeric fluoropolymer mentioned above contains PAVE units, the PAVE unit content is preferably 20 to 70% by mass.

When the elastomeric fluoropolymer contains PMVE units, the PMVE unit content is preferably 30 to 55% by mass.

The hydrocarbon olefin mentioned above is not particularly restricted but may be ethylene or propene, for instance, and propene is preferred.

When the above-mentioned elastomeric fluoropolymer contains hydrocarbon olefin units, the hydrocarbon olefin unit content is preferably 4 to 20% by mass.

The elastomeric fluoropolymer is not particularly restricted provided that the fluorine atom content is at least 58% by mass. For example, there may be mentioned fluoropolymers producible by emulsion polymerization, including, among others, TFE/perfluoro(vinyl ether)-based copolymers, VdF/HFP-based copolymers, VdF/CTFE-based copolymers, VdF/HFP/TFE-based copolymers, VdF/CTFE/TFE-based copolymers, TFE/propylene-based copolymers, TFE/propylene/VdF-based copolymers, ethylene/HFP-based copolymers and like fluorocopolymers.

The elastomeric fluoropolymer is preferably a VDF-based copolymer or a TFE-based copolymer. The TFE-based copolymer is preferably a TFE/propylene-based copolymer or a TFE/perfluoro(vinyl ether)-based copolymer.

The VDF-based copolymer includes, among others, VDF/HFP copolymers, VDF/HFP/TFE copolymers, VDF/HFP/TFE/4-bromo-3,3,4,4-tetrafluorobutene-1 copolymers, VDF/HFP/TFE/4-iodo-3,3,4,4-tetrafluorobutene-1 copolymers, VDF/PMVE/TFE/4-bromo-3,3,4,4-tetrafluorobutene-1 copolymers, VDF/PMVE/TFE/4-iodo-3,3,4,4-tetrafluorobutene-1 copolymers and VDF/PMVE/TFE/1,1,3,3,3-pentafluoropropene copolymers.

The TFE/propylene-based copolymer is, for example, a TFE/propylene copolymer.

The TFE/perfluoro(vinyl ether)-based copolymer includes, among others, TFE/PMVE/ethylene copolymers, TFE/PMVE/ethylene/4-bromo-3,3,4,4-tetrafluorobutene-1 copolymers, TFE/PMVE/ethylene/4-iodo-3,3,4,4-tetrafluorobutene-1 copolymers, TFE/PMVE copolymers, TFE/PMVE/perfluoro(8-cyano-5-methyl-3,6-dioxa-1-octene) copolymers, TFE/PMVE/4-iodo-3,3,4,4-tetrafluorobutene-1 copolymers and TFE/PMVE/perfluoro(2-phenoxypropyl vinyl ether) copolymers.

The method of producing an elastomeric fluoropolymer of the invention comprises first polymerization step and second polymerization step of producing an elastomeric fluoropolymer in the aqueous emulsion obtained in the first polymerization step.

The above-mentioned first polymerization step comprises subjecting a fluoromonomer [A] to emulsion polymerization in an aqueous medium in the presence of a vinyl group-containing fluorinated emulsifier to thereby obtain an aqueous emulsion.

The vinyl group-containing fluorinated emulsifier is a compound having a radical polymerizable unsaturated bond and a hydrophilic group within the molecule thereof.

The "compound having a radical polymerizable unsaturated bond and a hydrophilic group within the molecule thereof" is preferably a vinyl group-containing fluorinated compound (1) represented by the general formula (1):

$$CR^1R^2=CR^3(CR^4R^5)_j-(O)_k-R-Y \qquad (1)$$

[wherein $R^1$, $R^2$, $R^3$, $R^4$ and $R^5$ are the same or different and each represents a perfluoroalkyl group (which may optionally be substituted by H), H, F, Cl, Br or I, R represents a straight or branched fluoroalkylene group resulting from substitution of part or all of H atoms of the corresponding alkylene group by F, which may contain oxygen [-O-] atom in the main chain thereof, j represents an integer of 0 to 6, k represents an integer of 0 or 1, and Y represents a hydrophilic group].

In the above general formula (1), the above-mentioned $R^1$, $R^2$, $R^3$, $R^4$ and $R^5$, which may be the same or different, each preferably is H or F.

In the above general formula (1), the above-mentioned R, which may contain oxygen [-O-] atom in the main chain thereof, is preferably a straight or branched perfluoroalkylene group containing 1 to 23 carbon atoms within the main chain thereof. When it contains oxygen [-O-] atom in the main chain thereof, the oxygen atom is preferably an oxygen atom constituting a polyoxyalkylene group composed of 1 to 10 oxyalkylene units (each preferably containing 2 or 3 carbon atoms). When it is branched, the side chain is preferably $-CF_3$.

In the above general formula (1), the integer j is preferably 0 to 2.

In the above general formula (1), the hydrophilic group represented by Y is preferably - $SO_3M$ or -COOM (in which M represents H, $NH_4$ or an alkali metal).

The vinyl group-containing fluorinated emulsifier mentioned above preferably is a vinyl group-containing fluorinated compound (I), a vinyl group-containing fluorinated compound (II), a vinyl group-containing fluorinated compound (III), a vinyl group-containing fluorinated compound (IV), a vinyl group-containing fluorinated compound (V), a vinyl group-containing fluorinated compound (VI), a vinyl group-containing fluorinated compound (VII) and/or a vinyl group-containing fluorinated compound (VIII).

The vinyl group-containing fluorinated emulsifier may comprise a single species or two or more species each independently selected from among the vinyl group-containing fluorinated compounds (I) to (VIII) and mutually differing in the number of carbon atoms and/or in substituent group species.

The vinyl group-containing fluorinated compound (I) is represented by the general formula (I) :

$$CF_2=CF-(CF_2)_a-Y \qquad (I)$$

[wherein a represents an integer of 1 to 10 and Y represents $-SO_3M$ or -COOM in which M represents H, $NH_4$ or an alkali metal].

In the above general formula (I), the integer a is preferably not greater than 5, more preferably not greater than 2. The above group Y is preferably -COOM from the proper water solubility and surfactant activity viewpoint, and M is preferably H or $NH_4$ from the viewpoint of little tendency toward remaining as an impurity and of improved thermal stability of the final product moldings.

As the vinyl group-containing fluorinated compound (I), there may be mentioned, among others, the following:

$CF_2=CF-CF_2-COOH$, $CF_2=CF-CF_2-COONH_4$,
$CF_2=CF-CF_2CF_2-COOH$, $CF_2=CF-CF_2-COONH_4$,
$CF_2=CF-CF_2-SO_3H$, $CF_2=CF-CF_2-SO_3Na$,
$CF_2=CF-CF_2CF_2-SO_3H$ and $CF_2=CF-CF_2CF_2-SO_3Na$.

Among them, $CF_2=CFCF_2-COONH_4$ is preferred from the improved dispersion stability viewpoint.

The vinyl group-containing fluorinated compound (II) is represented by the general formula (II) :

$$CF_2=CF-(CF_2C(CF_3)F)_b-Y \qquad (II)$$

[wherein b represents an integer of 1 to 5 and Y represents $-SO_3M$ or -COOM in which M represents H, $NH_4$ or an alkali metal].

In the above general formula (II), the integer b is preferably not greater than 3 from the emulsifying ability viewpoint. Y is preferably - COOM from the proper water solubility and surfactant activity viewpoint, and M is preferably H or $NH_4$ from the viewpoint of little tendency toward remaining as an impurity and of improved thermal stability of the final product moldings.

As the vinyl group-containing fluorinated compound (II), there may be mentioned, among others, the following:

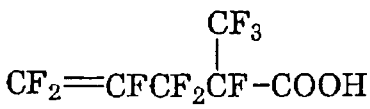 、 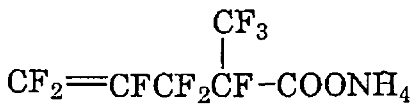 、

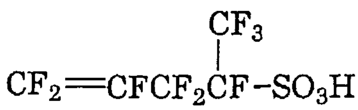 、 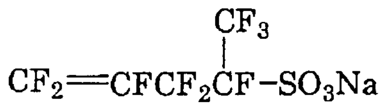 、

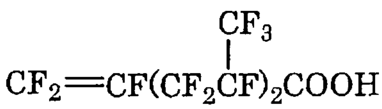 、 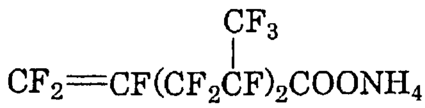

Preferred among them from the improved dispersion stability viewpoint are the following:

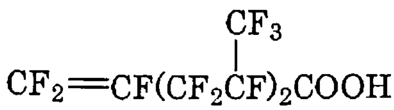 、

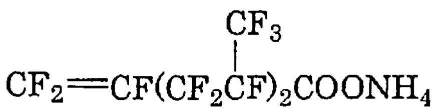

The vinyl group-containing fluorinated compound (III) is represented by the general formula (III):

$$CF_2=CFO-(CF_2)_c-Y \qquad (III)$$

[wherein c represents an integer of 1 to 10 and Y represents $-SO_3M$ or -COOM in which M represents H, $NH_4$ or an alkali metal].

In the above general formula (III), the integer c is preferably not greater than 5 from the water solubility viewpoint, Y is preferably -COOM from the proper water solubility and surfactant activity viewpoint, and M is preferably H or $NH_4$ from the dispersion stability improvement viewpoint.

As the vinyl group-containing fluorinated compound (III), there may be mentioned, among others, the following:

$CF_2=CF-OCF_2-COOH$,
$CF_2=CF-OCF_2-COONH_4$,
$CF_2=CF-OCF_2CF_2-COOH$,
$CF_2=CF-OCF_2CF_2-COONH_4$,
$CF_2=CF-OCF_2CF_2CF_2-COOH$ and
$CF_2=CF-OCF_2CF_2CF_2-COONH_4$,

Among them, $CF_2=CF-OCF_2CF_2CF_2-COONH_4$ is preferred from the better dispersion stability viewpoint.

The vinyl group-containing fluorinated compound (IV) is represented by the general formula (IV) :

$$CF_2=CF(CF_2)_d-O-(CF_2CFXO)_e-(CF_2)_f-Y \qquad (IV)$$

[wherein X represents -F or $-CF_3$, d represents an integer of 0 to 2, e represents an integer of 1 to 10, f represents an integer of 1 to 3 and Y represents $-SO_3M$ or -COOM in which M represents H, $NH_4$ or an alkali metal].

In the above general formula (IV), the moiety X is preferably $-CF_3$ from the surfactant activity viewpoint, the integer d is preferably 0 (zero) from the copolymerizability viewpoint, the integer e is preferably not greater than 5 from the water solubility viewpoint, the group Y is preferably - COOM from the proper water solubility and surfactant activity viewpoint, the integer f is preferably not greater than 2, and M is preferably H or $NH_4$.

As the vinyl group-containing fluorinated compound (IV), there may be mentioned, among others, the following:

$CF_2=CF-O-CF_2CF(CF_3)-OCF_2-COOH$,

$CF_2=CF-O-CF_2CF(CF_3)-OCF_2-COONH_4$,

$CF_2=CF-O-CF_2CF(CF_3)-OCF_2SO_3H$ ,

$CF_2=CF-O-CF_2CF(CF_3)-OCF_2SO_3Na$ ,

$CF_2=CF-O-CF_2CF(CF_3)-OCF_2CF_2-COOH$ ,

$CF_2=CF-O-CF_2CF(CF_3)-OCF_2CF_2-COONH_4$.

$CF_2=CF-O-CF_2CF(CF_3)-OCF_2CF_2SO_3H$ .

$CF_2=CF-O-CF_2CF(CF_3)-OCF_2CF_2SO_3Na$.

$CF_2=CF-CF_2-O-CF_2CF(CF_3)-OCF_2CF_2-COOH$,

$CF_2=CF-CF_2-O-CF_2CF(CF_3)-OCF_2CF_2-COONH_4$,

$CF_2=CF-CF_2-O-CF_2CF(CF_3)-OCF_2CF_2SO_3H$,

$CF_2=CF-CF_2-O-CF_2CF(CF_3)-OCF_2CF_2SO_3Na$,

$CF_2=CF-CF_2-CF_2-O-CF_2CF(CF_3)-OCF_2CF_2-COOH$,

$CF_2=CF-CF_2-CF_2-O-CF_2CF(CF_3)-OCF_2CF_2-COONH_4$,

$CF2=CF-CF_2-CF_2-O-CF_2CF(CF_3)-OCF_2CF_2SO_3H$,

$CF_2=CF-CF_2-CF_2-O-CF_2CF(CF_3)-OCF_2CF_2SO_3Na$

Preferred among them from the better dispersion stability viewpoint are:

$CF_2=CF-O-CF_2CF(CF_3)-OCF_2-COOH$,

$CF_2=CF-O-CF_2CF(CF_3)-OCF_2-COONH_4$,

$CF_2=CF-O-CF_2CF(CF_3)-OCF_2SO_3H$,

$CF_2=CF-O-CF_2CF(CF_3)-OCF_2SO_3Na$,

$CF_2=CF-O-CF_2(CF_3)-OCF_2CF_2-COOH$,

$CF_2=CF-O-CF_2CF(CF_3)-OCF_2CF_2-COONH_4$,

$CF_2=CF-O-CF_2CF(CF_3)-OCF_2CF_2SO_3H$,

$CF_2=CF-O-CF_2CF(CF_3)-OCF_2CF_2SO_3Na$,

$CF_2=CF-CF_2-O-CF_2CF(CF_3)-OCF_2CF_2-COOH$,

$CF_2=CF-CF_2-O-CF_2CF(CF_3)-OCF_2CF_2-COONH_4$,

$CF_2=CF-CF_2-O-CF_2CF(CF_3)-OCF_2CF_2-SO_3H$.

$CF_2=CF-CF_2-O-CF_2CF(CF_3)-OCF_2CF_2-SO_3Na$

The vinyl group-containing fluorinated compound (V) is represented by the general formula (V) :

$$CH_2=CFCF_2O-(CF(CF_3)CF_2O)_g-CF(CF_3)-Y \qquad (V)$$

[wherein g represents an integer of 0 or 1 to 10 and Y represents $-SO_3M$ or -COOM in which M represents H, $NH_4$ or an alkali metal].

In the above general formula (V), the integer g is preferably 0 or 1 to 5, more preferably 0 to 2, still more preferably 0 or 1, from the emulsifying activity viewpoint, Y is preferably -COOM from the proper water solubility and surfactant activity viewpoint, and M is preferably H or $NH_4$ from the viewpoint of little tendency toward remaining as an impurity and of improved thermal stability of the final product moldings.

As the vinyl group-containing fluorinated compound (V), there may be mentioned, among others, the following:

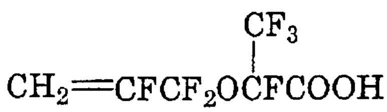 、 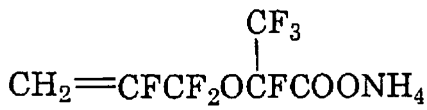 、

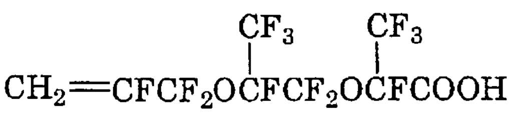 、 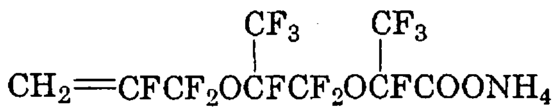 、

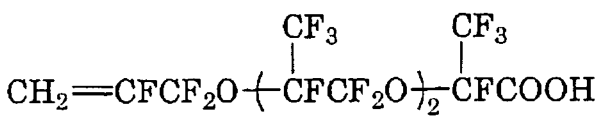 、

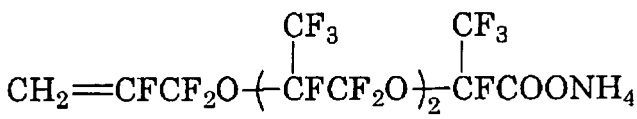

Among them, the following are preferred in view of their little tendency toward remaining as impurities and of their ability

to improve the thermal stability of the final product moldings:

$CH_2=CFCF_2OCF\ (CF_3)\text{-}COOH$,
$CH_2=CFCF_2OCF(CF_3)\text{-}COONH_4$,
$CH_2=CFCF_2OCF(CF_3)\text{-}CF_2OCF(CF_3)\text{-}COOH$ and
$CH_2=CFCF_2OCF(CF_3)\text{-}CF_2OCF(CF_3)\text{-}COONH_4$.

The vinyl group-containing fluorinated compound (VI) is represented by the general formula (VI):

$$CF_2=CF(CF_2)_hO\text{-}(CF(CF_3)CF_2O)_i\text{-}CF(CF_3)\text{-}Y \qquad (VI)$$

[wherein h represents an integer of 1 to 6, i represents an integer of 1 to 10 and Y represents - $SO_3M$ or -COOM in which M represents H, $NH_4$ or an alkali metal].

In the above general formula (VI), the integer h is preferably not greater than 2, more preferably not greater than 1, from the copolymerizability viewpoint, the integer i preferably not greater than 3 from the emulsifying activity viewpoint, the group Y is preferably -COOM from the proper water solubility and surfactant activity viewpoint, and M is preferably H or $NH_4$ from the viewpoint of little tendency toward remaining as an impurity and of improved thermal stability of the final product moldings.

As the vinyl group-containing fluorinated compound (VI), there may be mentioned, among others, the following:

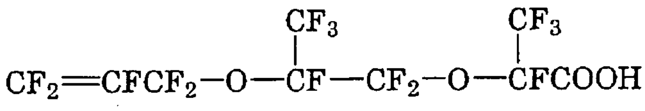 、

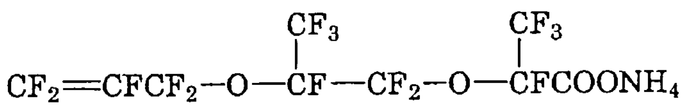 、

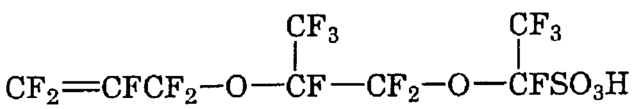 、

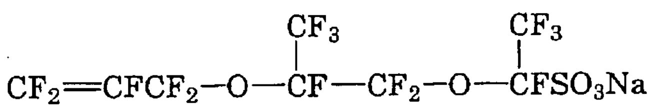

Among them, the following are preferred in view of their little tendency toward remaining as impurities and of their contribution to improvements in thermal stability of the final product moldings:

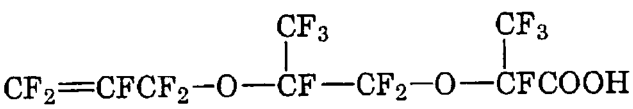 、

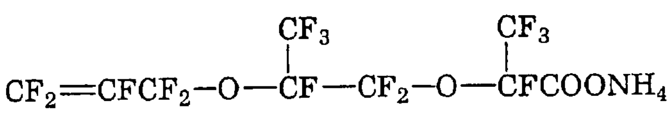

The vinyl group-containing fluorinated compound (VII) is represented by the general formula (VII):

$$CH_2=CH\ (CF_2)_{p1}\text{-}Y \qquad (VII)$$

[wherein p1 represents an integer of 1 to 10 and Y represents $-SO_3M$ or -COOM in which M represents H, $NH_4$ or an alkali metal].

In the above general formula (VII), the integer p1 is preferably not greater than 5, more preferably not greater than 2, from the emulsifying ability viewpoint. Y is preferably -COOM from the proper water solubility and surfactant activity viewpoint, and M is preferably H or $NH_4$ from the viewpoint of little tendency toward remaining as an impurity and of improved thermal stability of the final product moldings.

As the vinyl group-containing fluorinated compound (VII), there may be mentioned, among others, the following:

$CH_2=CH\text{-}CF_2CF_2\text{-}COOH$,
$CH_2=CH\text{-}CF_2CF_2\text{-}COONH_4$,
$CH_2=CH\text{-}CF_2CF_2\text{-}SO_3H$,
$CH_2=CH\text{-}CF_2CF_2\text{-}SO_3Na$,
$CH_2=CH\text{-}CF_2CF_2CF_2\text{-}COOH$,
$CH_2=CH\text{-}CF_2CF_2CF_2\text{-}COONH_4$,
$CH_2=CH\text{-}CF_2CF_2CF_2\text{-}SO_3H$ and
$CH_2=CH\text{-}CF_2CF_2CF_2\text{-}SO_3Na$.

Among them, $CH_2=CH\text{-}CF_2CF_2\text{-}COONH_4$ is preferred from the better dispersion stability viewpoint.

The vinyl group-containing fluorinated compound (VIII) is represented by the general formula (VIII):

$$CF_2=CFO\text{-}(CH_2)_q\text{-}(CF_2)_{p2}\text{-}Y \qquad (VIII)$$

[wherein q represents an integer of 1 to 4, p2 represents an integer of 1 to 10 and Y represents - $SO_3M$ or -COOM in which M represents H, $NH_4$ or an alkali metal].

In the above general formula (VIII), the integer q is preferably not greater than 2, more preferably equal to 1. The integer p2 is preferably not greater than 5, more preferably not greater than 2, from the emulsifying ability viewpoint. The group Y is preferably -COOM from the proper water solubility and surfactant activity viewpoint, and M is preferably H or $NH_4$ from the viewpoint of little tendency toward remaining as an impurity and of improved thermal stability of the final product moldings.

As the vinyl group-containing fluorinated compound (VIII), there may be mentioned, among others, the following:

$CF_2=CFO\text{-}CH_2CF_2CF_2\text{-}COOH$,
$CF_2=CFO\text{-}CH_2CF_2CF_2\text{-}COONH_4$,
$CF_2=CFO\text{-}CH_2CF_2CF_2\text{-}SO_3H$ and
$CF_2=CFO\text{-}CH_2CF_2CF_2\text{-}SO_3Na$.

Among them, $CF_2=CFO\text{-}CH_2CF_2CF_2\text{-}COONH_4$ is preferred from the better dispersion stability viewpoint.

From the good copolymerizability viewpoint, the vinyl group-containing fluorinated emulsifier mentioned above preferably is the above-mentioned vinyl group-containing fluorinated compound (I), vinyl group-containing fluorinated compound (III), vinyl group-containing fluorinated compound (IV), vinyl group-containing fluorinated compound (V), vinyl group-containing fluorinated compound (VI), vinyl group-containing fluorinated compound (VII), and/or vinyl group-containing fluorinated compound (VIII). More preferably, it is the above-mentioned vinyl group-containing fluorinated compound (V).

From the better dispersion stability viewpoint, the above-mentioned vinyl group-containing fluorinated emulsifier most preferably is a vinyl group-containing fluorinated compounds represented by the general formula (i):

$$CH_2=CFCF_2O\text{-}(CF(CF_3)CF_2O)_k\text{-}CF(CF_3)\text{-}Y \qquad (i)$$

(wherein k represents an integer of 0 to 3 and Y represents $-SO_3M$ or -COOM in which M represents H, $NH_4$ or an alkali metal).

In the above general formula (i), k is preferably an integer of 0 to 2, more preferably an integer of 0 or 1, and Y is preferably -COOH or - $COONH_4$.

The vinyl group-containing fluorinated emulsifier mentioned above may be a mixture of compounds differing in the number of moles of the oxyalkylene group added in each of the general formulas (I) to (VIII) and (i).

The "compounds having a radical polymerizable unsaturated bond and a hydrophilic group within the molecule" such as the vinyl group-containing fluorinated emulsifiers, the vinyl group-containing fluorinated compounds (I) to (VIII) or vinyl group-containing fluorinated compound (i) constituting the vinyl group-containing fluorinated emulsifiers and the vinyl group-containing fluorinated compounds (1) can be prepared using the methods known in the art.

In the above-mentioned first polymerization step, the vinyl group-containing fluorinated emulsifier is preferably used at addition levels of 1 ppm to 10% by mass relative to the aqueous medium.

At vinyl group-containing fluorinated emulsifier addition levels lower than 1 ppm relative to the aqueous medium, the elastomeric fluoropolymer obtained tends to adhere to the reaction vessel inside in an increased amount, reducing the productivity and, at levels exceeding 10% by mass relative to the aqueous medium, the thermal stability of the product elastomeric fluoropolymer may become poor.

A more preferred lower limit to the level of addition of the vinyl group-containing fluorinated emulsifier is 10 ppm relative to the aqueous medium and a still more preferred lower limit is 50 ppm relative to the aqueous medium. A more preferred upper limit thereto is 5% by mass relative to the aqueous medium, a still more preferred upper limit is 2% by mass relative to the aqueous medium and a most preferred upper limit is 1% by mass relative to the aqueous medium.

The above-mentioned first polymerization step comprises polymerizing a fluoromonomer in the presence of the above-mentioned vinyl group-containing fluorinated emulsifier and, therefore, the emulsion polymerization can be carried out without adding any of those fluorine-containing surfactants or other emulsifiers which have so far been used, and the aqueous emulsion obtained is low in the content of the above-mentioned fluorine-containing surfactant or a like emulsifier and contains uniform and minute polymer particles. Further, as described later herein, it is possible to use the aqueous emulsion obtained in the above-mentioned first polymerization step in the emulsion polymerization in the second polymerization step without adding any of those fluorine-containing surfactants and other emulsifiers which are in conventional use.

In the above-mentioned first polymerization step, a fluoromonomer [A] is subjected to emulsion polymerization in an aqueous medium in the presence of the vinyl group-containing fluorinated emulsifier mentioned above.

The fluoromonomer [A] includes, within the meaning thereof, the first monomers mentioned above and a copolymerizable compound containing at least one fluorine atom, which is optionally added.

The fluoromonomer is, for example, the above-mentioned fluoroolefin or fluorine-containing vinyl ether.

Preferred as the fluoromonomer [A] are VDF, TFE, HFP and CTFE because the elastomeric fluoropolymer obtained is excellent in moldability and so forth.

In the first polymerization step, one single species or two or more species of the fluoromonomer [A] may be added.

In the first polymerization step, a fluorine-free monomer may optionally be added in addition to the fluoromonomer [A].

The fluorine-free monomer is, for example, the hydrocarbon olefin mentioned above. Preferred as the hydrocarbon olefin are alkenes containing 2 to 4 carbon atoms, and propylene [Pr] is more preferred.

In the first polymerization step, the total amount of the fluoromonomer [A] and optional fluorine-free monomer to be added can be properly determined according to the molecular weight and yield of the desired elastomeric fluoropolymer and other factors.

Considering the stability of the aqueous emulsion in the second stage of polymerization, a preferred lower limit to the total feed of the fluoromonomer [A] and fluorine-free monomer is 10 parts by mass and a more preferred lower limit is 20 parts by mass, per 100 parts by mass of the aqueous medium and, from the elastomeric fluoropolymer yield viewpoint, a preferred upper limit thereto is 100 parts by mass and a more preferred upper limit is 80 parts by mass per, per 100 parts by mass of the aqueous medium.

The total feed of the fluoromonomer [A] and fluorine-free monomer is the sum total of the amounts to be initially charged at the start of the polymerization reaction and the amounts to be continuously fed during the polymerization reaction. The feed of the fluorine-free monomer among the above monomers can be properly selected according to the composition of the desired elastomeric fluoropolymer.

The above polymerization may be carried out by adding a radical polymerization initiator to the aqueous medium in addition to the vinyl group-containing fluorinated emulsifier, the fluoromonomer [A] and the optional fluorine-free monomer.

Generally used as the radical polymerization initiator are water-soluble inorganic compound peroxides or water-soluble organic compound peroxides, for example persulfates such as ammonium persulfate and potassium persulfate, bissuccinoyl peroxide and bisglutaroyl peroxide. These may be used singly or two or more of them may be used in combination. In carrying out the polymerization within a low temperature range, a redox system initiator is preferably used. Further, so long as the stability of the latex will not be impaired, it is also possible to use a water-insoluble organic peroxide and/or a water-insoluble azo compound either alone or in combination with a water-soluble inorganic compound peroxide or a water-soluble organic compound peroxide.

The level of addition of the radical polymerization initiator can be properly selected according to the composition and yield of the elastomeric fluoropolymer to be produced and to the usages of the fluoromonomer [A] and the fluorine-free monomer to be added if desired and so forth. The radical polymerization initiator is preferably added at levels of 0.01 to 0.4 part by mass, more preferably 0.05 to 0.3 part by mass, per 100 parts by mass of the elastomeric fluoropolymer to be obtained.

In the above-mentioned first polymerization step, the emulsion polymerization may be carried out by adding a chain transfer agent to the aqueous medium in addition to the vinyl group-containing fluorinated emulsifier, the fluoromonomer [A], the fluorine-free monomer to be added when desired and the radical polymerization initiator.

The chain transfer agent may comprise one single species or a combination of two or more species.

The chain transfer agent is not particularly restricted but includes those used in the production of elastomeric fluoropolymers, for example alcohols containing 1 to 12 carbon atoms, esters containing 1 to 12 carbon atoms, alkanes containing 1 to 12 carbon atoms, ketones containing 1 to 12 carbon atoms, and mercaptans containing 1 to 12 carbon atoms. The compounds mentioned above may be partially substituted by a halogen atom or atoms, for example a fluorine, chlorine, bromine and/or iodine atom or atoms.

The alcohols containing 1 to 12 carbon atoms include, for example, methanol, ethanol, propanol and butanol.

The esters containing 1 to 12 carbon atoms include, for example, methyl acetate, ethyl acetate, butyl acetate, ethyl propionate, dimethyl malonate, diethyl malonate, dimethyl succinate and diethyl succinate.

The alkanes containing 1 to 12 carbon atoms include, for example, methane, ethane, propane, butane, pentane and hexane.

The ketones containing 1 to 12 carbon atoms include, for example, acetone, acetylacetone, methyl ethyl ketone and cyclohexanone.

The mercaptans containing 1 to 12 carbon atoms include, for example, dodecylmercaptan and the like.

As the partially halogen-substituted compounds, there may be mentioned, for example, chlorocarbons, chloroform, carbon tetrachloride, methylene bromide and methylene iodide.

Preferred as the chain transfer agent are saturated hydrocarbons containing 1 to 6 carbon atoms, alcohol containing 1 to 4 carbon atoms, carboxylic acid ester compounds containing 4 to 8 carbon atoms, chlorine-substituted hydrocarbons containing 1 or 2 carbon atoms, ketones containing 3 to 5 carbon atoms, and/or mercaptans containing 10 to 12 carbon atoms.

More preferred as the chain transfer agent are isopentane, isopropanol, diethyl malonate, carbon tetrachloride, acetone, ethyl acetate, dodecylmercaptan and/or the like from the viewpoint of dispersibility in polymerization medium, chain transfer behavior and removability from desired products. Still more preferred as the chain transfer agent are isopentane, diethyl malonate and/or ethyl acetate, among others, since their chain transfer behavior is appropriate and they cause little decrease in rate of polymerization.

In the method of producing an elastomeric fluoropolymer of the invention, the chain transfer agent is preferably used at addition levels of 0.0001 to 5 parts by mass per 100 parts by mass of the total addition amount of the fluoromonomer [A] and the optional fluorine-free monomer. For adjusting the molecular weight and molecular weight distribution of the elastomeric fluoropolymer, the chain transfer agent may be added more preferably in an amount of not smaller than 0.0005 part by mass, still more preferably not smaller than 0.001 part by mass, per 100 parts by mass of the total addition amount mentioned above, and more preferably in an amount of not larger than 1 part by mass, still more preferably not larger than 0.1 part by mass, on the same basis.

When the method of producing an elastomeric fluoropolymer of the invention comprises polymerizing a fluoromonomer in the presence of the chain transfer agent mentioned above, it is possible to inhibit the elastomeric fluoropolymer from increasing in molecular weight due to the polymerization initiator generally added and thereby produce low-molecular-weight molecules as well and broaden the molecular weight distribution of the product elastomeric fluoropolymer. Accordingly, the elastomeric fluoropolymer obtained by the method of producing an elastomeric fluoropolymer of the invention are well balanced between the molecular weight and molecular weight distribution, are easy to mold and process, and can give moldings low in permanent compression set.

In the first polymerization step, the emulsion polymerization may also be carried out by adding, to the aqueous medium, a cure site monomer (hereinafter sometimes referred to as "crosslinking site-containing monomer"), for instance, in addition to the above-mentioned vinyl group-containing fluorinated emulsifier, fluoromonomer [A], optional fluorine-free monomer and radical polymerization initiator.

As the crosslinking site-containing monomer, there may be mentioned, for example, bromine-containing olefins, iodine-containing olefins, bromine-containing vinyl ethers, iodine-containing vinyl ethers, nitrile group-containing fluoroolefins, nitrile group-containing fluorovinyl ethers, 1,1,3,3,3-pentafluoropropene [2-HPFP], perfluoro(2-phenoxypropyl vinyl ether) and non-conjugated dienes.

As the bromine-containing olefins, iodine-containing olefins, bromine-containing vinyl ethers, iodine-containing vinyl ethers, nitrile group-containing fluoroolefins, nitrile group-containing fluorovinyl ethers and non-conjugated dienes, there may be mentioned those compounds described in US 2002/0040119, and one or two or more species of the

compounds belonging to the bromine-containing olefins and other compound groups can be used. Preferred among them are, however, the following:

$CH_2$=CH-Rf-$CH_2CH_2I$ (Rf being a perfluoroalkylene group),
$CH_2$=$CHCF_2CF_2I$,
$CF_2$=$CFOCF_2CF_2CH_2I$

and the like.

In cases where the elastomeric fluoropolymer obtained is to be crosslinked using a peroxide, 4-bromo-3,3,4,4-tetrafluorobutene-1 [BTFB], 4-iodo-3,3,4,4-tetrafluorobutene-1 [ITFB], allyl iodide, bromotrifluoroethylene and perfluoro (8-cyano-5-methyl-3,6-dioxa-1-octene) [8-CNVE] are preferred as the crosslinking site-containing monomer.

When the elastomeric fluoropolymer obtained is to be crosslinked using a polyol, 2-HPFP or perfluoro(2-phenoxypropyl vinyl ether) is preferred as the crosslinking site-containing monomer.

When the elastomeric fluoropolymer obtained is to be crosslinked using a polyamine, bis(aminophenol), bis (thioaminophenol) or 8-CNVE is preferred as the crosslinking site-containing monomer.

In carrying out the method of producing an elastomeric fluoropolymer of the invention, only one single species of the crosslinking site-containing monomers mentioned above may be used or two or more species thereof may be used in combination.

In carrying out the method of producing an elastomeric fluoropolymer of the invention, the crosslinking site-containing monomer mentioned above is preferably added at levels of 0.05 to 10% by mass relative to the total amount of the monomers to be fed. More preferably, the crosslinking site-containing monomer can be added at levels not exceeding 5% by mass, still more preferably not exceeding 3% by mass, relative to the total amount of the monomers to be fed.

Furthermore, the above-mentioned first polymerization step may also be carried out by adding a fluorine-containing surfactant other than the vinyl group-containing fluorinated emulsifier and/or a radical scavenger and/or another additive or other additives.

As the above-mentioned fluorine-containing surfactant, there may be mentioned, for example, surfactants comprising fluorocarboxylic acids represented by the formula:

$$Z^2\text{-}(CF^2)_{aa}\text{-}COOH$$

[wherein $Z^2$ represents F or H and aa represents an integer of 3 to 20] and alkali metal salts, ammonium salts, amine salts and quaternary ammonium salts thereof; or comprising fluorocarboxylic acids represented by the formula:

$$Z^3\text{-}(CH_2CF_2)_{bb}\text{-}COOH$$

[wherein $Z^3$ represents F or Cl and bb represents an integer of 3 to 13] and alkali metal salts, ammonium salts, amine salts and quaternary ammonium salts thereof; or comprising acidic compounds represented by the formula:

$$RfO\text{-}(CF(CF_3)CF_2O)_{cc}\text{-}CF(CF_3)\text{-}Z^4$$

[wherein Rf represents an perfluoroalkyl group containing 1 to 7 carbon atoms, cc represents an integer of 0 to 10 and $Z^4$ represents -COOM or -$SO_3M$ in which M represents H, $NH_4$ or an alkali metal].

In carrying out the polymerization, one or two or more species of the above-mentioned fluorine-containing surfactants may be added.

The fluorine-containing surfactant addition level can be suitably selected according to the composition and yield of the elastomeric fluoropolymer to be produced. In accordance with the invention, however, elastomeric fluoropolymer capable of giving moldings excellent in mechanical strength and chemical strength, among others, can be obtained by carrying out the polymerization in the absence of any fluorine-containing surfactant.

The term "fluorine-containing surfactant" as used herein does not include, within the meaning thereof, the vinyl group-containing fluorinated emulsifier mentioned above.

In the polymerization mentioned above, an additional portion or portions of the vinyl group-containing fluorinated emulsifier can also be fed with the progress of the polymerization reaction.

In the case of an additional portion or portions of the fluorine-containing, vinyl group containing emulsifier being fed, the amount of that portion of the vinyl group-containing fluorinated emulsifier remaining unreacted in the aqueous emulsion can be reduced.

The temperature, pressure, polymerization time and other reaction conditions in the first polymerization step can be properly selected according to the amount, composition and concentration of the elastomeric fluoropolymer to

be prepared.

The first polymerization step is generally carried out while maintaining the temperature within the range of 10 to 120°C. At temperatures lower than 10°C, any effectively high rate of reaction cannot be attained on an industrial scale. At temperatures exceeding 120°C, the reaction pressure necessary for maintaining the polymerization reaction will become so high that the apparatus for maintaining the reaction becomes expensive.

The first polymerization step is generally carried out while maintaining the pressure within the range of 0.5 to 10 MPa. A preferred lower limit to the pressure range is 1.0 MPa and a preferred upper limit to that range is 6.2 MPa.

When the first polymerization step is carried out in a semibatchwise manner, the desired polymerization pressure can be attained at the initial stage of polymerization by adjusting the monomer gas amount on the occasion of initial feeding. After the start of the polymerization, the pressure is adjusted by adjusting the additional monomer gas feed.

When the first polymerization step is carried out continuously, the desired polymerization pressure is adjusted by adjusting the back pressure in the outlet tube for the elastomeric fluoropolymer emulsion obtained.

If the pressure mentioned above is lower than 0.5 MPa, the monomer concentration in the polymerization reaction system will become too low, hence the rate of reaction cannot arrive at a satisfactory level; as a result, the elastomeric fluoropolymer obtained may fail to have a satisfactorily high molecular weight. At pressure levels exceeding 10 MPa, the cost of the apparatus for maintaining the pressure will rise.

The first polymerization step is generally carried for 0.5 to 100 hours.

The aqueous emulsion obtained by carrying out the first polymerization step comprises polymer particles resulting from polymerization of the fluoromonomer [A] dispersed in the aqueous medium. This dispersion is presumably due to the side chains derived from the above-mentioned vinyl group-containing fluorinated compound introduced into the polymer in the manner of addition and, if there is additionally the remainder of the vinyl group-containing fluorinated emulsifier, this will presumably contribute to the dispersion. Therefore, the method of producing an elastomeric fluoropolymer of the invention does not require the addition of any emulsifier other than the vinyl group-containing fluorinated emulsifier in the second polymerization step as well.

The number of polymer particles in the above-mentioned aqueous emulsion is generally 1.0 x $10^{13}$ to 1.0 x $10^{17}$/ml.

The method of producing an elastomeric fluoropolymer of the invention may further comprise, prior to the second polymerization step, the step of diluting the aqueous emulsion obtained in the first polymerization step with water to thereby reduce the number of polymer particles emulsified per unit amount of the aqueous medium in the aqueous emulsion as well as the concentration of the vinyl group-containing fluorinated emulsifier.

The above-mentioned dilution step facilitates the efficient use of the aqueous emulsion obtained from the first polymerization step dividedly in a plurality of portions in the second polymerization step.

The number of polymer particles in the aqueous emulsion after the dilution step is preferably 1.0 x $10^{13}$ to 1.0 x $10^{16}$/ml.

The above-mentioned number of polymer particles is the value obtained by making a calculation based on the average particle diameter measured by dynamic light scattering, the specific gravity of the polymer and the polymer concentration.

The concentration of the vinyl group-containing fluorinated emulsifier in the aqueous emulsion after the above dilution step is preferably lower than 1000 ppm, more preferably lower than 100 ppm, still more preferably lower than 10 ppm.

The above-mentioned concentration of the vinyl group-containing fluorinated emulsifier is the value obtained by adding an equal volume of methanol to the aqueous emulsion and subjecting the mixture to Soxhlet extraction, followed by HPLC analysis.

It is also possible to add such an oil-soluble radical polymerization initiator as mentioned later herein prior to the increase in the number of polymer particles in the first polymerization step without carrying out the dilution step mentioned above. If, on that occasion, the oil-soluble radical polymerization initiator is added before the start of polymer particle generation, aggregation will result. When such initiator is added after the start of polymer particle formation, the oil-soluble radical polymerization initiator is absorbed or adsorbed on the polymer particles, so that the polymerization can be carried out efficiently as a whole.

In accordance with the method of producing an elastomeric fluoropolymer of the invention, the second polymerization step comprises subjecting a fluoromonomer [B] to emulsion polymerization in the aqueous emulsion obtained in the first polymerization step to produce an elastomeric fluoropolymer.

At the time of starting the second polymerization step, the aqueous emulsion obtained from the first polymerization step comprises the polymer particles obtained in the first polymerization step, the aqueous medium, and the unreacted vinyl group-containing fluorinated emulsifier, if remaining.

The term "aqueous emulsion obtained from the first polymerization step" as used herein includes, within the meaning thereof, both the aqueous emulsion obtained just after completion of the first polymerization step and the aqueous emulsion obtained after the above-mentioned optional dilution step.

As the fluoromonomer [B] mentioned above, there may be mentioned the same ones described hereinabove referring to the fluoromonomer [A]. The fluoromonomer [B] may be the same or different in kind as or from the fluoromonomer [A].

The fluoromonomer [B] to be fed may comprise only one species or two or more species.

In accordance with the method of producing an elastomeric fluoropolymer of the invention, the fluoromonomer [B] is subjected to emulsion polymerization as an essential monomer in the second polymerization step, so that it is possible to stably polymerize a weight exceeding 100 parts by weight, per 100 parts by weight of the elastomeric fluoropolymer obtained from the first polymerization step, of the fluoromonomer [B] in that second polymerization step.

In the second polymerization step, a fluorine-free monomer may also be fed, if desired, in addition to the above-mentioned fluoromonomer [B].

As the fluorine-free monomer, there may be mentioned the same ones as described hereinabove referring to the fluorine-free monomer for use in the first polymerization step.

In the second polymerization step, the fluorine-free monomer to be fed may comprise only one species or two or more species.

In the second polymerization step, the total feed of the fluoromonomer [B] and the optionally fed fluorine-free monomer can be properly determined according to the molecular weight and yield of the desired elastomeric fluoropolymer, among others.

The total feed in the second polymerization step is preferably at a level exceeding 100 parts by weight per 100 parts by weight of the elastomeric fluoropolymer contained in the aqueous emulsion obtained from the first polymerization step from the economy and productivity viewpoint and, from the viewpoint of stability of the reaction system and curability of the product elastomeric fluoropolymer, it is preferably at a level not exceeding 20000 parts by weight on the same basis.

A more preferred lower level to the total feed in the second polymerization step is 1000 parts by weight per 100 parts of the elastomeric fluoropolymer containing in the aqueous emulsion obtained from the first polymerization step, and a still more preferred lower limit is 3000 parts by weight. A more preferred upper limit thereto is 10000 parts by weight, and a still more preferred upper limit is 5000 parts by weight.

Preferably, the second polymerization step is carried out further using a chain transfer agent.

By adding a chain transfer agent and properly selecting the kind thereof, the level of addition thereof and the timing of the addition thereof in the second polymerization step, it becomes possible to control the molecular weight distribution of the product elastomeric fluoropolymer and adjust the balance between the elongation, tensile strength, permanent compression set, rate of curing and other characteristics and the moldability/processability of the product elastomeric fluoropolymer.

As the chain transfer agent, there may be mentioned the same ones as described hereinabove referring to the first polymerization step.

In the second polymerization step, the chain transfer agent is preferably added at a level of 0.0001 to 5 parts by mass relative to 100 parts by mass of the total feed of the fluoromonomer [B] and the fluorine-free monomer optionally added. The level of the chain transfer agent is more preferably not lower than 0.0005 part by mass, still more preferably not lower than 0.001 part by mass, and more preferably not higher than 1 part by mass, still more preferably not higher than 0.1 part by mass, from the viewpoint of adjusting the molecular weight and molecular weight distribution of the elastomeric fluoropolymer.

In carrying out the method of producing an elastomeric fluoropolymer of the invention, the chain transfer agent may be used in the first polymerization step and/or the second polymerization step.

In the second polymerization step, the above-mentioned crosslinking site-containing monomer and/or the above-mentioned vinyl group-containing fluorinated emulsifier, among others, may be additionally fed according to need in addition to the fluoromonomer [B] and the optionally added fluorine-free monomer and chain transfer agent.

In the second polymerization step, the vinyl group-containing fluorinated emulsifier concentration may be within the same range as in the first polymerization step. However, the addition of the fluorine-containing surfactant is preferably omitted.

The first polymerization step and second polymerization step according to the method of producing an elastomeric fluoropolymer of the invention are preferably carried out in the absence of any fluorine-containing surfactant.

The second polymerization step according to the method of producing an elastomeric fluoropolymer of the invention can be carried out using any of the methods known in the art provided that a fluoromonomer [B] is subjected to emulsion polymerization in the presence of the aqueous emulsion obtained from the first polymerization step.

The emulsion polymerization reaction conditions in the second polymerization step can be properly selected according to the composition and yield of the elastomeric fluoropolymer to be obtained, and the emulsion polymerization can be carried out employing the same polymerization temperature, polymerization pressure and polymerization time as in the first polymerization step mentioned above.

When the first polymerization step is carried out using a water-soluble radical polymerization initiator, the second polymerization step according to the method of producing an elastomeric fluoropolymer of the invention is preferably

carried out using an oil-soluble radical polymerization initiator.

The oil-soluble radical polymerization initiator includes those oil-soluble peroxides known in the art, for example dialkyl peroxycarbonates, peroxy esters, dialkyl peroxides, di(perfluoroacyl) peroxides, and di(fluorochloroacyl) peroxides.

As the dialkyl peroxycarbonates, there may be mentioned diisopropyl peroxycarbonate and di-sec-butyl peroxycarbonate, among others.

As the peroxy esters, there may be mentioned tert-butyl peroxyisobutyrate and tert-butyl peroxypivalate, among others.

As the dialkyl peroxides, there may be mentioned tert-butyl peroxide and so forth.

As the di(perfluoroacyl) peroxides and di(fluorochloroacyl) peroxides, there may be mentioned di (ω-hydrododecafluoroheptanoyl) peroxide, di(ω-hydrotetradecafluoroheptanoyl) peroxide, di(ω-hydrohexafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, ω-hydrododecafluoroheptanoyl ω-hydrohexadecafluorononanoyl peroxide, ω-hydrododecafluoroheptanoyl perfluorobutyryl peroxide, di(ω-chlorohexafluorobutyryl) peroxide, di(ω-chlorodecafluorohexanoyl) peroxide, di(ω-chlorotetradecafluorooctanoyl) peroxide, ω-chlorohexafluorobutyryl ω-chlorodecafluorohexanoyl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di (undecachlorodotriacontafluorodocosanoyl) peroxide.

Among the oil-soluble radical polymerization initiators mentioned above, dialkyl peroxydicarbonates are preferred, and diisopropyl peroxydicarbonate [IPP] is more preferred.

The oil-soluble radical polymerization initiator can reduce the tendency of the polymer toward increasing in molecular weight due to the addition of the water-soluble radical polymerization initiator in the first polymerization step and, therefore, the elastomeric fluoropolymer obtained through the first polymerization step and second polymerization step shows a broad molecular weight distribution and is well balanced between the physical properties, such as elongation and tensile strength and the moldability/processability. In the second polymerization step, the oil-soluble radical polymerization initiator is preferably added at a level of 0.001 to 0.1 part by mass per 100 parts by mass of the aqueous medium. A more preferred lower limit to the above addition level is 0.005 part by mass and a more preferred upper limit thereto is 0.05 part by mass.

The combination of the water-soluble radical polymerization initiator and oil-soluble radical polymerization initiator in carrying out the method of producing an elastomeric fluoropolymer of the invention is not particularly restricted but, when ammonium persulfate is used as the water-soluble radical polymerization initiator, for instance, diisopropyl peroxydicarbonate is preferably added as the oil-soluble radical polymerization initiator in the second polymerization step.

When DEM is to be added as the chain transfer agent in the second polymerization step, ammonium persulfate is preferably added as the water-soluble radical polymerization initiator in the first polymerization step.

The elastomeric fluoropolymer obtained from the method of producing an elastomeric fluoropolymer of the invention comprises the above-mentioned first monomer-derived units and other units involved in the copolymerization and, in addition, it comprises emulsifier units derived from the vinyl group-containing fluorinated emulsifier.

The term "emulsifier unit" as used herein means the segment derived from the corresponding vinyl group-containing fluorinated emulsifier and partially constituting the molecular structure of the elastomeric fluoropolymer.

The above-mentioned emulsifier units now partially constitute the polymer chain of the elastomeric fluoropolymer as a result of addition of the compound constituting the vinyl group-containing fluorinated emulsifier to the polymer chain because of the presence of the vinyl group-containing fluorinated emulsifier in the reaction system in the above-mentioned polymerization.

The content of the emulsifier units mentioned above is preferably not lower than 10 ppm but not higher than 10% by mass of the elastomeric fluoropolymer. When the content is lower than 10 ppm, the dispersion stability in the aqueous medium may be inferior as compared with the prior art case where no non-copolymerizable emulsifier is used. At levels exceeding 10% by mass, thermal stability and other physical properties may deteriorate.

A more preferred lower limit to the emulsifier unit content is 25 ppm of the elastomeric fluoropolymer, and a still more preferred lower limit is 50 ppm. A more preferred upper limit to the emulsifier unit content is 5% by mass and a still more preferred upper limit is 2.5% by mass.

The above-mentioned elastomeric fluoropolymer contains the above-mentioned emulsifier units and therefore makes it possible to prepare an aqueous dispersion showing good dispersion stability in the aqueous medium therefrom.

The above-mentioned elastomeric fluoropolymer generally has a Mooney viscosity of 10 to 100 as measured at 100°C. A preferred lower limit to the Mooney viscosity is 30 from the mechanical strength and chemical strength viewpoint, and a preferred upper limit thereto is 80 from the moldability/processability viewpoint.

The Mooney viscosity [ML(1+10)] so referred to herein is the value obtained by carrying out the measurement according to ASTM D 1646.

The amount of the elastomeric fluoropolymer obtained from the method of producing an elastomeric fluoropolymer of the invention is roughly equal to the total monomer amount additionally fed and, generally, the fluoropolymer is obtained in an amount of 10 to 30 parts by mass, preferably 20 to 25 parts by mass, per 100 parts by mass of the aqueous medium. When the elastomeric fluoropolymer content is lower than 10 parts by mass per 100 parts by mass of the aqueous medium, the productivity will be undesirably low and, when it exceeds 30 parts by mass per 100 parts by mass of the aqueous medium, it becomes sometimes difficult for the elastomeric fluoropolymer to be dispersed.

The elastomeric fluoropolymer just after polymerization as obtained by carrying out the polymerization mentioned above generally has an average particle size of 10 to 500 nm and is excellent in dispersion stability.

The elastomeric fluoropolymer obtained by the method of producing an elastomeric fluoropolymer of the invention may be in any form provided that it is the product obtained by the polymerization mentioned above; thus, it may constitute an aqueous emulsion as obtained just after polymerization, or may constitute such an elastomeric fluoropolymer aqueous dispersion as mentioned later herein, or may constitute a kind of gum or crumb as obtained from the above-mentioned aqueous emulsion by coagulation and drying, for instance.

The gum mentioned above consists of small granular lumps of the elastomeric fluoropolymer, and the crumb mentioned above is in the form of an amorphous mass of the elastomeric fluoropolymer as resulting from failure of that polymer to retain the gum form at room temperature and fusion together of the small granular lumps.

The method of producing an elastomeric fluoropolymer of the invention comprises the above-mentioned first polymerization step and second polymerization step and, as a result, the molecular weight and molecular weight distribution of the product elastomeric fluoropolymer can be properly adjusted. Therefore, according to the method of producing an elastomeric fluoropolymer of the invention, it is possible to polymerize, in a stable manner, an amount exceeding 100 parts by weight, per 100 parts by weight of the polymer particles obtained from the first polymerization step, of certain fluoromonomer species different in kind from those polymer particles, unlike the conventional methods of producing elastomeric fluoropolymers by which such polymerization is difficult to perform.

An elastomeric fluoropolymer aqueous dispersion which comprises a particle comprising the above-mentioned elastomeric fluoropolymer dispersed in an aqueous medium also constitutes an aspect of the present invention.

Generally, the elastomeric fluoropolymer aqueous dispersion of the invention contains a vinyl group-containing fluorinated emulsifier or is free of such emulsifier.

The elastomeric fluoropolymer aqueous dispersion of the invention can be rendered free of the vinyl group-containing fluorinated emulsifier in the aqueous medium since the elastomeric fluoropolymer contains the emulsifier units mentioned above.

The vinyl group-containing fluorinated emulsifier content in the elastomeric fluoropolymer aqueous dispersion of the invention can be reduced to less than 1000 ppm.

The vinyl group-containing fluorinated emulsifier content in the elastomeric fluoropolymer aqueous dispersion of the invention is preferably lower than 100 ppm, more preferably lower than 10 ppm, from the viewpoint of good crosslinkability in the step of molding/processing.

The content of the elastomeric fluoropolymer in the elastomeric fluoropolymer aqueous dispersion of the invention can be adjusted to 10 to 70 parts by mass per 100 parts by mass of the aqueous medium by such a procedure as concentration.

The elastomeric fluoropolymer aqueous dispersion of the invention can be prepared, for example, by subjecting the aqueous emulsion obtained just after completion of the above-mentioned polymerization reaction to coagulation by a conventional method, followed by purification.

The method of purification is not particularly restricted but includes, for example, extraction, ion exchange resin treatment, and ultrafiltration membrane treatment.

The elastomeric fluoropolymer aqueous dispersion of the invention has a vinyl group-containing fluorinated emulsifier content within the range mentioned above and, therefore, can be processed into substantially vinyl group-containing fluorinated emulsifier-free coagulates, compositions, moldings and so forth.

The elastomeric fluoropolymer rubber (gum) or crumb comprising the elastomeric fluoropolymer mentioned above can generally be rendered substantially free of any fluorine-containing surfactant.

The above-mentioned elastomeric fluoropolymer rubber (gum) or crumb can be obtained by subjecting the elastomeric fluoropolymer aqueous dispersion of the invention to coagulation and drying.

The coagulant that can be used in the above coagulation includes aluminum salts such as aluminum sulfate and alum, calcium salts such as calcium sulfate, magnesium salts such as magnesium sulfate, and coagulation aids, for example monovalent cation salts such as sodium chloride and potassium chloride.

The above-mentioned elastomeric fluoropolymer can be compounded into an elastomeric fluoropolymer composition by adding a curing agent, a filler and/or the like.

The curing agent may be a polyol, polyamine, organic peroxide, organotin, bis(aminophenol)tetraamine or bis (thioaminophenol), for instance.

The above-mentioned elastomeric fluoropolymer composition, which comprises the elastomeric fluoropolymer mentioned above, is substantially free of the vinyl group-containing fluorinated emulsifier and is excellent in view of ready

crosslinkability in the step of molding/processing.

Elastomeric fluoropolymer moldings can be obtained by molding/processing the above-mentioned elastomeric fluoropolymer, the elastomeric fluoropolymer aqueous dispersion of the invention or the above-mentioned elastomeric fluoropolymer rubber or crumb. The method of molding/processing is not particularly restricted but may be the method comprising using the curing agent mentioned above.

The elastomeric fluoropolymer moldings mentioned above, which comprises the above-mentioned elastomeric fluoropolymer, are low in permanent compression set, excellent in mechanical strength and are suited for use as seals, electric wire coverings, tubes, laminates and so forth, in particular as semiconductor manufacturing parts and automotive parts, among others.

EFFECTS OF THE INVENTION

The method of producing an elastomeric fluoropolymer of the invention, which has the constitution described hereinabove, is useful since it is simple and easy to apply, the elastomeric fluoropolymers obtained show a high rate of curing and, further, the moldings obtained therefrom are low in permanent compression set.

BEST MODES FOR CARRYING OUT THE INVENTION

The following examples illustrate the invention in further detail. These examples are, however, by no means limitative of the scope of the invention.

The measurements made in the Examples and Comparative Examples were carried out in the following manner.

(1) Solid matter concentration: The aqueous emulsion obtained was dried at 150°C for 1 hour and the solid matter concentration was calculated based on the loss in mass on that occasion.
(Notes: Used in the measurements (2), (3), (4) and (6) mentioned below were the washed and dried coagulation products obtained through the steps of coagulation, washing and drying.)
(2) Mooney viscosity [ML(1+10)]: Measured according to ASTM D 1646.
(3) Composition of the elastomeric fluoropolymer: Calculated based on the values obtained by $F^{19}$ NMR spectrometry.
(4) Vinyl group-containing fluorinated emulsifier concentration: The washed and dried coagulation product (1 g) derived from each aqueous emulsion was dissolved in 10 g of acetone, this polymer solution was dispersed in 30 g of deionized water, the solid matter was removed and the reactive emulsifier remaining unreacted in the aqueous acetone solution was determined by liquid chromatography/tandem mass spectrometry (LC/MS/MS) (detection limit: 1 ppb).
In the above LC/MS/MS, Waters 2695 Separation module, Micromass Quattro micro TM API, and Waters 2996 Photodiode Array detector (all being products of Waters) were used. In the above liquid chromatography, Waters Atlantis dC-18 column (30 mm x 2.1 mm i.d.) was used and the elution was carried out with 0.01 M ammonium acetate:acetonitrile (55:45 v:v) at a flow rate of 0.15 ml/minute. In the tandem mass spectrometry, negative electrospray ($ESP^-$) ionization was carried out.
(5) Average particle diameter: The dynamic light scattering method was employed.
(6) Iodine atom content: Determined by carrying out elemental analysis.
(7) Number of polymer particles: Calculated from the average particle diameter and solid matter concentration using the equation given below. The specific gravity was considered to be 1.8.

$$\text{Number of polymer particles} = (\text{solid matter concentration})/[100 - (\text{solid matter concentration})]/\{4/3 \times 3.14 \times [(\text{average particle diameter (nm)}) \times 1/2 \times 10^{-9}]^3 \times (\text{specific gravity}) \times 10^6\}$$

(8) Vinyl group-containing fluorinated emulsifier concentration in the elastomeric fluoropolymer aqueous emulsion: The aqueous emulsion was mixed with an equal volume of methanol, the mixture was subjected to Soxhlet extraction and the concentration in question was determined by HPLC assaying (detection limit: 1 ppm).

Example 1: First polymerization step using RS-1

A 3-liter stainless steel pressure vessel equipped with a stirrer was charged with 1200 ml of deionized water and 1.2 g of ammonium perfluoro(9,9-dihydro-2,5-bistrifluoromethyl-3,6-dioxa)-8-nonenoate [RS-1] as a vinyl group-containing fluorinated emulsifier and, after repeated pressurization with nitrogen and vacuum degassing, a fluoromonomer mixture composed of VDF/HFP = 65/35 mole percent (hereinafter such fluoromonomer mixture is referred to as "mixed monomer") was introduced into the vessel under reduced pressure of -700 mmHg to thereby raise the pressure to 0.85 MPa at 80°C. Upon addition of 12 g of a 2% (by mass) aqueous solution of ammonium persulfate, the pressure was found to fall. Therefore, after a pressure falls to 0.75 MPa, a mixed monomer composed of VDF/HFP = 78/22 mole percent was introduced to restore the pressure of 0.85 MPa.

Thereafter, while repeating this procedure, the reaction was.continued for 4.2 hours to give 1417 g of an aqueous emulsion. The aqueous emulsion obtained had a solid matter concentration of 15.3% by mass and an average particle diameter of 32 nm and, as for the number of polymer particles, each $cm^3$ of the aqueous emulsion contained $5.54 \times 10^{15}$ particles.

Hydrochloric acid was added to the aqueous emulsion obtained to cause coagulation, followed by washing and further followed by 12 hours of drying at 120°C. A washed and dried coagulation product was thus recovered. The washed and dried coagulation product (polymer specific gravity 1.8 g/$cm^3$) had a composition of VDF/HFP/RS-1 = 76.8/23.1/0.1 mole percent (58.4/41.1/0.5% by mass), and the unreacted RS-1 concentration was below the detection limit.

Example 2: First polymerization step using RS-2 [AEC-0]

An aqueous emulsion (1427 g) was obtained in the same manner as in Example 1 except that 0.7 g of ammonium perfluoro(6,6-dihydro-2-trifluoromethyl-3-oxa)-5-hexenoate [RS-2] was used as the vinyl group-containing fluorinated emulsifier and that the polymerization was carried out for 3.9 hours. This aqueous emulsion had a solid matter concentration of 14.9% by mass, and the average particle diameter was 28.3 nm. The number of polymer particles was $8.20 \times 10^{15}$ per $cm^3$ of the water used in the polymerization.

The washed and dried coagulation product obtained by coagulation, washing and drying in the same manner as in Example 1 had a composition of VDF/HFP/RS-2 = 80.7/19.2/0.1 mole percent (63.9/35.6/0.5% by mass), and the unreacted RS-2 content was below the detection limit.

Example 3: First polymerization step using RS-3 [CBVE]

An aqueous emulsion (1591 g) was obtained in the same manner as in Example 1 except that 1.2 g of ammonium perfluoro(5-trifluoromethyl-4,7-dioxa)-8-nonenoate [RS-3] was used as the vinyl group-containing fluorinated emulsifier and that the polymerization was carried out for 4 hours. This aqueous emulsion had a solid matter concentration of 13.9% by mass, and the average particle diameter was 24 nm. The number of polymer particles was $1.24 \times 10^{16}$ per $cm^3$ of the water used in the polymerization.

The washed and dried coagulation product obtained by coagulation, washing and drying in the same manner as in Example 1 had a composition of VDF/HFP/RS-3 = 77.3/22.6/0.1 mole percent (59.3/40.4/0.3% by mass), and the unreacted RS-3 content was 362 ppm.

Example 4: First polymerization step using RS-4 [SBVE]

An aqueous emulsion (1413 g) was obtained in the same manner as in Example 1 except that 2.4 g of sodium perfluoro(4-trifluoromethyl-3,6-dioxa)-7-octene-1-sulfonate [RS-4] was used as the vinyl group-containing fluorinated emulsifier and that the polymerization was carried out for 2.9 hours.

This aqueous emulsion had a solid matter concentration of 15.3% by mass, and the average particle diameter was 31 nm. The number of polymer particles was $6.31 \times 10^{15}$ per $cm^3$ of the water used in the polymerization. The washed and dried coagulation product obtained by coagulation, washing and drying in the same manner as in Example 1 had a composition of VDF/HFP/RS-4 = 79.8/20.1/0.1 mole percent (62.5/36.9/0.5% by mass), and the unreacted RS-4 content was 137 ppm.

Example 5: RS-1 dilution step and second polymerization step

A 3-liter stainless steel pressure vessel equipped with a stirrer was charged with 162.5 g of the aqueous emulsion obtained in Example 1 and 1462 g of deionized water and, after repeated pressurization with nitrogen and vacuum degassing, a mixed monomer composed of VDF/HFP = 65/35 mole percent was introduced into the vessel at

a reduced pressure of -700 mmHg and the pressure was raised to 1.5 MPa at 80°C. Then, 2.59 g of $I(CF_2CF_2)_2I$ was fed under pressure and, further, 4 g of a 2% (by mass) aqueous solution of ammonium persulfate was fed under pressure to thereby initiate the reaction. The pressure was found to fall and, therefore, after each pressure fall to 1.45 MPa, a mixed monomer composed of VDF/HFP = 78/22 mole percent was introduced to restore the pressure of 1.5 MPa. While adding 4 g of a 2% (by mass) aqueous solution of ammonium persulfate under pressure at 3-hour intervals, the reaction was continued for 10.5 hours to give 2190 g of an aqueous emulsion.

The aqueous emulsion obtained had a solid matter concentration of 25.2% by mass and an average particle diameter of 150 nm, the unreacted RS-1 concentration therein was below the detection limit and, as for the number of polymer particles, each $cm^3$ of the aqueous emulsion contained 1.06 x $10^{14}$ particles.

Hydrochloric acid was added to the aqueous emulsion obtained to cause coagulation, followed by washing and further followed by 12 hours of drying at 120°C. A washed and dried coagulation product was thus recovered. The washed and dried coagulation product obtained from the aqueous emulsion had a composition of VDF/HFP = 77.6/22.4 mole percent (59.6/40.4% by mass), an unreacted RS-1 content below the detection limit, and an iodine atom content of 0.2% by mass.

Example 6: RS-2 dilution step and second polymerization step

A 3-liter stainless steel pressure vessel equipped with a stirrer was charged with 109 g of the aqueous emulsion obtained in Example 2 and 1507 g of deionized water and, after repeated pressurization with nitrogen and vacuum degassing, a mixed monomer composed of VDF/HFP = 65/35 mole percent was introduced into the vessel at a reduced pressure of -700 mmHg and the pressure was raised to 1.5 MPa at 80°C. Then, 2.59 g of $I(CF_2CF_2)_2I$ was fed under pressure and, further, 4 g of a 2% (by mass) aqueous solution of ammonium persulfate was fed under pressure to thereby initiate the reaction. The pressure was found to fall and, therefore, after each pressure fall to 1.45 MPa, a mixed monomer composed of VDF/HFP = 78/22 mole percent was introduced to restore the pressure of 1.5 MPa. While adding 4 g of a 2% (by mass) aqueous solution of ammonium persulfate under pressure at 3-hour intervals, the reaction was continued for 10 hours to give 2150 g of an aqueous emulsion.

The aqueous emulsion obtained had a solid matter concentration of 25.5% by mass and an average particle diameter of 147 nm and, as for the number of polymer particles, each $cm^3$ of the aqueous emulsion contained 1.14 x $10^{14}$ particles.

The unreacted RS-2 concentration in the washed and dried coagulation product obtained from the above aqueous emulsion was below the detection limit.

Example 7: RS-3 dilution step and second polymerization step

A 3-liter stainless steel pressure vessel equipped with a stirrer was charged with 65.9 g of the aqueous emulsion obtained in Example 3 and 1543 g of deionized water and, after repeated pressurization with nitrogen and vacuum degassing, a mixed monomer composed of VDF/HFP = 65/35 mole percent was introduced into the vessel at a reduced pressure of -700 mmHg and the pressure was raised to 1.5 MPa at 80°C. Then, 2.59 g of $I(CF_2CF_2)_2I$ was fed under pressure and, further, 4 g of a 2% (by mass) aqueous solution of ammonium persulfate was fed under pressure to thereby initiate the reaction. The pressure was found to fall and, therefore, after each pressure fall to 1.45 MPa, a mixed monomer composed of VDF/HFP = 78/22 mole percent was introduced to restore the pressure of 1.5 MPa. While adding 4 g of a 2% (by mass) aqueous solution of ammonium persulfate under pressure at 3-hour intervals, the reaction was continued for 12.5 hours to give 2160 g of an aqueous emulsion.

The aqueous emulsion obtained had a solid matter concentration of 25.7% by mass and an average particle diameter of 145 nm and, as for the number of polymer particles, each $cm^3$ of the aqueous emulsion contained 1.20 x $10^{14}$ particles.

The unreacted RS-3 concentration in the washed and dried coagulation product obtained from the above aqueous emulsion was below the detection limit.

Example 8: RS-4 dilution step and second polymerization step

A 3-liter stainless steel pressure vessel equipped with a stirrer was charged with 143 g of the aqueous emulsion obtained in Example 4 and 1479 g of deionized water and, after repeated pressurization with nitrogen and vacuum degassing, a mixed monomer composed of VDF/HFP = 65/35 mole percent was introduced into the vessel at a reduced pressure of -700 mmHg and the pressure was raised to 1.5 MPa at 80°C. Then, 2.59 g of $I(CF_2CF_2)_2I$ was fed under pressure and, further, 4 g of a 2% (by mass) aqueous solution of ammonium persulfate was fed under pressure to thereby initiate the reaction. The pressure was found to fall and, therefore, after each pressure fall to 1.45 MPa, a mixed monomer composed of VDF/HFP = 78/22 mole percent was introduced to restore the pressure of 1.5 MPa. While adding

4 g of a 2% (by mass) aqueous solution of ammonium persulfate under pressure at 3-hour intervals, the reaction was continued for 12 hours to give 2140 g of an aqueous emulsion.

The aqueous emulsion obtained had a solid matter concentration of 25.3% by mass and an average particle diameter of 154 nm and, as for the number of polymer particles, each $cm^3$ of the aqueous emulsion contained 0.98 x $10^{14}$ particles.

The unreacted RS-4 concentration in the washed and dried coagulation product obtained from the above aqueous emulsion was below the detection limit.

Example 9: RS-1 dilution step and second polymerization step (using an oil-soluble radical polymerization initiator)

A 3-liter stainless steel pressure vessel equipped with a stirrer was charged with 162.5 g of the aqueous emulsion obtained in Example 1 and 1462 g of deionized water and, after repeated pressurization with nitrogen and vacuum degassing, a mixed monomer composed of VDF/HFP = 55/45 mole percent was introduced into the vessel at a reduced pressure of -700 mmHg and the pressure was raised to 1.5 MPa at 60°C. Then, 2.8 g of isopropyl peroxydicarbonate, as an oil-soluble radical polymerization initiator, was fed under pressure to initiate the reaction. The pressure was found to fall and, therefore, after a pressure fall to 1.45 MPa, a mixed monomer composed of VDF/HFP = 78/22 mole percent was introduced to restore the pressure of 1.5 MPa and, while repeating this pressure restoration procedure, the reaction was continued for 4.6 hours to give 2195 g of an aqueous emulsion.

The aqueous emulsion obtained had a solid matter concentration of 27.2% by mass and an average particle diameter of 172 nm, the unreacted RS-1 concentration therein was 1 ppm (= detection limit in HPLC) and, as for the number of polymer particles, each $cm^3$ of the aqueous emulsion contained 7.83 x $10^{13}$ particles.

Hydrochloric acid was added to the aqueous emulsion obtained to cause coagulation, followed by washing and further followed by 12 hours of drying at 120°C. The desired elastomeric fluoropolymer (washed and dried coagulation product) was thus recovered. The washed and dried coagulation product obtained had a composition of VDF/HFP = 76.8/23.2 mole percent (58.5/41.5% by mass); the unreacted RS-1 content was below the detection limit.

Example 10: RS-1 dilution step and second polymerization step (using a chain transfer agent)

A 2-liter stainless steel pressure vessel equipped with a stirrer was charged with 101.5 g of the aqueous emulsion obtained in Example 1 and 900 g of deionized water, together with 5 g of diethyl malonate as a chain transfer agent, and, after repeated pressurization with nitrogen and vacuum degassing, 430 g of HFP was introduced at a reduced pressure of -700 mmHg and then the pressure was raised to 6 MPa at a vessel temperature of 80°C with a mixed monomer composed of VDF/HFP = 95.5/4.5 mole percent. Then, 13 g of a 2% (by mass) aqueous solution of ammonium persulfate was fed under pressure, upon which the pressure was found to fall and, therefore, a mixed monomer composed of VDF/HFP = 95.5/4.5 mole percent was continuously fed to maintain the vessel inside pressure at 6 MPa. The reaction was continued for 3 hours to give 1286 g of an aqueous emulsion. The aqueous emulsion obtained had a solid matter concentration of 22.4% by mass and an average particle diameter of 150 nm, the unreacted RS-1 concentration therein was 1 ppm (= detection limit in HPLC) and, as for the number of polymer particles, each $cm^3$ of the aqueous emulsion contained 8.6 x $10^{13}$ particles.

Hydrochloric acid was added to the aqueous emulsion obtained to cause coagulation, followed by washing and further followed by 12 hours of drying at 120°C. A washed and dried coagulation product was thus recovered.

The washed and dried coagulation product obtained from the aqueous emulsion had a composition of VDF/HFP = 77.8/22.2 mole percent (69.2/30.6% by mass); the unreacted RS-1 content was below the detection limit.

Comparative Example 1: First polymerization step

A 3-liter stainless steel pressure vessel equipped with a stirrer was charged with 1200 ml of deionized water and 12 g of ammonium perfluoroocatanoate (APFO) and, after repeated pressurization with nitrogen and vacuum degassing, a mixed monomer composed of VDF/HFP = 65/35 mole percent was introduced into the vessel at a reduced pressure of -700 mmHg and the pressure was raised to 0.85 MPa at 80°C. Then, 12 g of a 2% (by mass) aqueous solution of ammonium persulfate was fed under pressure, upon which the pressure was found to fall. Therefore, after a pressure falls to 0.75 MPa, a mixed monomer composed of VDF/HFP = 78/22 mole percent was introduced to restore the pressure of 0.85 MPa.

Thereafter, while repeating this pressure restoration procedure, the reaction was continued for 3.8 hours to give 1408 g of an aqueous emulsion. The aqueous emulsion obtained had a solid matter concentration of 14.8% by mass, an average particle diameter of 52 nm and an APFO concentration of 8182 ppm and, as for the number of polymer particles, each $cm^3$ of the aqueous emulsion contained 1.2 x $10^{15}$ particles.

Hydrochloric acid was added to the aqueous emulsion obtained to cause coagulation, followed by washing

and further followed by 12 hours of drying at 120°C. A washed and dried coagulation product was thus recovered. The washed and dried coagulation product obtained from the aqueous emulsion had a composition of VDF/HFP = 77.8/22.2 mole percent (69.2/30.6% by mass).

Comparative Example 2: Dilution step and second polymerization step (iodine-containing elastomer)

A 3-liter stainless steel pressure vessel equipped with a stirrer was charged with 162.2 g of the aqueous emulsion obtained in Comparative Example 1 and 1462 g of deionized water and, after repeated pressurization with nitrogen and vacuum degassing, a mixed monomer composed of VDF/HFP = 65/35 mole percent was introduced into the vessel at a reduced pressure of -700 mmHg and the pressure was raised to 1.5 MPa at 80°C. Then, 2.59 g of $I(CF_2CF_2)_2I$ was fed under pressure and, further, 4 g of a 2% (by mass) aqueous solution of ammonium persulfate was fed under pressure to thereby initiate the reaction. The pressure was found to fall and, therefore, after each pressure fall to 1.45 MPa, a mixed monomer composed of VDF/HFP = 78/22 mole percent was introduced to restore the pressure of 1.5 MPa. While adding 4 g of a 2% (by mass) aqueous solution of ammonium persulfate under pressure at 3-hour intervals, the reaction was continued for 11.2 hours to give 2196 g of an aqueous emulsion.

The aqueous emulsion obtained had a solid matter concentration of 25.4% by mass, an average particle diameter of 162 nm and an APFO concentration of 576 ppm and, as for the number of polymer particles, each $cm^3$ of the aqueous emulsion contained $8.1 \times 10^{15}$ particles.

Hydrochloric acid was added to the aqueous emulsion obtained to cause coagulation, followed by washing and further followed by 12 hours of drying at 120°C. A washed and dried coagulation product was thus recovered. The washed and dried coagulation product obtained from the aqueous emulsion had a composition of VDF/HFP = 77.6/22.4 mole percent (59.6/40.4% by mass) and an iodine atom content of 0.19% by mass. It showed a Mooney viscosity of 46 at 100°C.

Test Example 1

The ingredients specified in Table 1 were incorporated in each of the elastomeric fluorocopolymer obtained in Example 5 and the fluorocopolymer obtained in Comparative Example 2, and each mixture was kneaded in the conventional manner on a rubber roll. The thus-prepared uniform curable composition was evaluated for curability on a curastometer. Further, the curable composition was cured under the conditions specified in Table 1 and the moldings were subjected to physical property measurements.

As for the test conditions, the tensile strength, elongation, tensile stress and permanent compression set were measured according to JIS K 6301, and the Shore hardness was measured according to ASTM D 2240. The curability was measured at 170°C using a curastometer (JSRII).

The results are shown in Table 1.

Table 1

| | Example 1 | Comp. Ex. 1 |
|---|---|---|
| Copolymer (parts by mass) | 100 | 100 |
| Bisphenol AF (parts by mass) | 2.0 | 2.0 |
| BTPPC (parts by mass) | 0.6 | 0.6 |
| Carbon black (parts by mass) | 20 | 20 |
| Magnesium oxide (parts by mass) | 3 | 3 |
| Calcium hydroxide (parts by mass) | 6 | 6 |
| Press curing | 170°C x 15 min | 170°C x 15 min |
| Oven curing | 230°C x 24 hrs | 230°C x 24 hrs |
| Tensile strength (MPa) | 14 | 13 |
| Elongation (%) | 245 | 240 |
| Tensile stress $M_{100}$ (MPa) | 4.2 | 4.5 |
| Permanent compression set (%) | 10 | 15 |
| Shore hardness | 76 | 77 |
| Curability | | |
| $T_{10}$ | 4.0 | 6.1 |

(continued)

| | | |
|---|---|---|
| Curability | | |
| $T_{90}$ | 5.0 | 8.2 |
| μ | 3.15 | 2.56 |

In Table 1, $T_{10}$ denotes "induction time", $T_{90}$ "optimum cure time", and μ "degree of curing".

The washed and dried coagulation product (fluoroelastomer) obtained in Example 5 showed higher cure rates ($T_{10}$, $T_{90}$) as compared with the washed and dried coagulation product obtained in Comparative Example 2, and gave moldings showing excellent characteristics, typically small permanent compression set.

INDUSTRIAL APPLICABILITY

The method of producing an elastomeric fluoropolymer of the invention, which has the constitution described hereinabove, is simple and easy to follow and the elastomeric fluoropolymers obtained show fast cure rates and, further, the moldings obtained therefrom show small permanent compression set; thus, the method of the invention is useful.

## Claims

1. A method of producing an elastomeric fluoropolymer which comprises first polymerization step for obtaining an aqueous emulsion by emulsion polymerization of a fluoromonomer [A] in an aqueous medium in the presence of a vinyl group-containing fluorinated emulsifier and second polymerization step for producing an elastomeric fluoropolymer by emulsion polymerization of a fluoromonomer [B] in said aqueous emulsion,
wherein said vinyl group-containing fluorinated emulsifier is a compound having a radical polymerizable unsaturated bond and a hydrophilic group within the molecule thereof.

2. The method of producing an elastomeric fluoropolymer according to Claim 1,
wherein the compound having the radical polymerizable unsaturated bond and the hydrophilic group within the molecule thereof is a vinyl group-containing fluorinated compound (1) represented by the general formula (1):

$$CR^1R^2=CR^3(CR^4R^5)_j-(O)_k-R-Y \qquad (1)$$

[wherein $R^1$, $R^2$, $R^3$, $R^4$ and $R^5$ are the same or different and each represents a perfluoroalkyl group (which may optionally be substituted by H), H, F, Cl, Br or I, R represents a straight or branched fluoroalkylene group resulting from substitution of part or all of H atoms of the corresponding alkylene group by F, which may contain oxygen atom in the main chain thereof, j represents an integer of 0 to 6, k represents an integer of 0 or 1, and Y represents a hydrophilic group].

3. A method of producing an elastomeric fluoropolymer which comprises first polymerization step for obtaining an aqueous emulsion by emulsion polymerization of a fluoromonomer [A] in an aqueous medium in the presence of a vinyl group-containing fluorinated emulsifier and second polymerization step for producing an elastomeric fluoropolymer by emulsion polymerization of a fluoromonomer [B] in said aqueous emulsion,
wherein said vinyl group-containing fluorinated emulsifier is a vinyl group-containing fluorinated compound (I) represented by the general formula (I):

$$CF_2=CF-(CF_2)_a-Y \qquad (I)$$

[wherein a represents an integer of 1 to 10 and Y represents $-SO_3M$ or -COOM in which M represents H, $NH_4$ or an alkali metal],
a vinyl group-containing fluorinated compound (II) represented by the general formula (II):

$$CF_2=CF-(CF_2C(CF_3)F)_b-Y \qquad (II)$$

[wherein b represents an integer of 1 to 5 and Y represents $-SO_3M$ or -COOM in which M represents H, $NH_4$ or an alkali metal],
a vinyl group-containing fluorinated compound (III) represented by the general formula (III):

$$CF_2=CFO-(CF_2)_c-Y \qquad (III)$$

[wherein c represents an integer of 1 to 10 and Y represents $-SO_3M$ or -COOM in which M represents H, $NH_4$ or an alkali metal],
a vinyl group-containing fluorinated compound (IV) represented by the general formula (IV):

$$CF_2=CF(CF_2)_d-O-(CF_2CFXO)_e-(CF_2)_f-Y \qquad (IV)$$

[wherein X represents -F or $-CF_3$, d represents an integer of 0 to 2, e represents an integer of 1 to 10, f represents an integer of 1 to 3 and Y represents $-SO_3M$ or -COOM in which M represents H, $NH_4$ or an alkali metal],
a vinyl group-containing fluorinated compound (V) represented by the general formula (V):

$$CH_2=CFCF_2O-(CF(CF_3)CF_2O)_g-CF(CF_3)-Y \qquad (V)$$

[wherein g represents an integer of 0 to 10 and Y represents $-SO_3M$ or -COOM in which M represents H, $NH_4$ or an alkali metal],
a vinyl group-containing fluorinated compound (VI) represented by the general formula (VI):

$$CF_2=CF(CF_2)_hO-(CF(CF_3)CF_2O)_i-CF(CF_3)-Y \qquad (VI)$$

[wherein h represents an integer of 1 to 6, i represents an integer of 1 to 10 and Y represents - $SO_3M$ or -COOM in which M represents H, $NH_4$ or an alkali metal],
a vinyl group-containing fluorinated compound (VII) represented by the general formula (VII):

$$CH_2=CH(CF_2)_{p1}-Y \qquad (VII)$$

[wherein p1 represents an integer of 1 to 10 and Y represents $-SO_3M$ or -COOM in which M represents H, $NH_4$ or an alkali metal] and/or
a vinyl group-containing fluorinated compound (VIII) represented by the general formula (VIII):

$$CF_2=CFO-(CH_2)_q-(CF_2)_{p2}-Y \qquad (VIII)$$

[wherein q represents an integer of 1 to 4, p2 represents an integer of 1 to 10 and Y represents - $SO_3M$ or -COOM in which M represents H, $NH_4$ or an alkali metal].

**4.** The method of producing an elastomeric fluoropolymer according to Claim 1, 2 or 3,
wherein the elastomeric fluoropolymer is a vinylidene fluoride-based copolymer.

**5.** The method of producing an elastomeric fluoropolymer according to Claim 1, 2 or 3,
wherein the elastomeric fluoropolymer is a tetrafluoroethylene/propylene-based copolymer.

**6.** The method of producing an elastomeric fluoropolymer according to Claim 1, 2 or 3,
wherein the elastomeric fluoropolymer is a tetrafluoroethylene/perfluoro vinyl ether-based copolymer.

**7.** The method of producing an elastomeric fluoropolymer according to Claim 3, 4, 5 or 6,
wherein the vinyl group-containing fluorinated emulsifier is the vinyl group-containing fluorinated compound (I), the vinyl group-containing fluorinated compound (III), the vinyl group-containing fluorinated compound (IV), the vinyl group-containing fluorinated compound (V), the vinyl group-containing fluorinated compound (VI), the vinyl group-containing fluorinated compound (VII) and/or the vinyl group-containing fluorinated compound (VIII).

**8.** The method of producing an elastomeric fluoropolymer according to Claim 7,
wherein said vinyl group-containing fluorinated emulsifier is a vinyl group-containing fluorinated compound (i) represented by the general formula (i):

$$CH_2=CFCF_2O-(CF(CF_3)CF_2O)_k-CF(CF_3)-Y \qquad (i)$$

[wherein k represents an integer of 0 to 3 and Y represents $-SO_3M$ or -COOM in which M represents H, $NH_4$ or an

alkali metal].

**9.** The method of producing an elastomeric fluoropolymer according to Claim 1, 2, 3, 4, 5, 6, 7 or 8, wherein the vinyl group-containing fluorinated emulsifier is used at an addition level of not lower than 1 ppm but not higher than 10% by mass relative to the aqueous medium.

**10.** The method of producing an elastomeric fluoropolymer according to Claim 1, 2, 3, 4, 5, 6, 7, 8 or 9, wherein the first polymerization step is carried out using a water-soluble radical polymerization initiator and the second polymerization step is carried out using an oil-soluble radical polymerization initiator.

**11.** The method of producing an elastomeric fluoropolymer according to Claim 1, 2, 3, 4, 5, 6, 7, 8, 9 or 10, wherein the first polymerization step and/or the second polymerization step is carried out using a chain transfer agent.

**12.** The method of producing an elastomeric fluoropolymer according to Claim 1, 2, 3, 4, 5, 6, 7, 8, 9, 10 or 11, wherein the first polymerization step and/or the second polymerization step is carried out in the absence of any fluorine-containing surfactant.

**13.** The method of producing elastomeric fluoropolymers according to Claim 1, 2, 3, 4, 5, 6, 7, 8, 9, 10, 11 or 12, which further comprises a dilution step in which the aqueous emulsion obtained in the first polymerization step is diluted with water to reduce the number of emulsified polymer particles and the vinyl group-containing fluorinated emulsifier concentration per unit quantity of the aqueous medium in said emulsion prior to the second polymerization step.

**14.** An elastomeric fluoropolymer aqueous dispersion which comprises a particle comprising an elastomeric fluoropolymer dispersed in an aqueous medium,
wherein said elastomeric fluoropolymer is an elastomeric fluoropolymer produced by the method according to Claim 1, 2, 3, 4, 5, 6, 7, 8, 9, 10, 11, 12 or 13,
said elastomeric fluoropolymer aqueous dispersion contains a vinyl group-containing fluorinated emulsifier or does not contain any vinyl group-containing fluorinated emulsifier and
the content of said vinyl group-containing fluorinated emulsifier is lower than 1000 ppm relative to said elastomeric fluoropolymer aqueous dispersion.

## INTERNATIONAL SEARCH REPORT

International application No.
PCT/JP2005/006678

A. CLASSIFICATION OF SUBJECT MATTER
Int.Cl[7] C08F2/26, 2/38, 214/18, 216/14

According to International Patent Classification (IPC) or to both national classification and IPC

B. FIELDS SEARCHED

Minimum documentation searched (classification system followed by classification symbols)
Int.Cl[7] C08F2/26, 2/38, 214/18, 216/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPIL(QWEB)

C. DOCUMENTS CONSIDERED TO BE RELEVANT

| Category* | Citation of document, with indication, where appropriate, of the relevant passages | Relevant to claim No. |
|---|---|---|
| A | WO 95/33782 A (Daikin Industries, Ltd.), 14 December, 1995 (14.12.95), Claims & EP 728776 B1 & JP 3291733 B & US 5670593 A & US 5986150 A | 1-14 |
| A | WO 00/01741 A (Daikin Industries, Ltd.), 13 January, 2000 (13.01.00), Claims & JP 2000-558141 A & EP 1153946 A & US 6509429 B1 | 1-14 |
| A | JP 61-33848 B (Asahi Glass Co., Ltd.), 05 August, 1986 (05.08.86), Claims (Family: none) | 1-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 July, 2005 (26.07.05) | 09 August, 2005 (09.08.05) |
| Name and mailing address of the ISA/ Japanese Patent Office | Authorized officer |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61033848 B
- JP H0867795 A
- WO 00001741 A
- US 20020040119 A